(19) Europäisches Patentamt
European Patent Office
Office européen des brevets

(11) **EP 4 149 114 A1**

(12) **EUROPEAN PATENT APPLICATION**
published in accordance with Art. 153(4) EPC

(43) Date of publication:
**15.03.2023 Bulletin 2023/11**

(21) Application number: **20936384.5**

(22) Date of filing: **19.05.2020**

(51) International Patent Classification (IPC):
***H04N 19/96*** (2014.01)

(52) Cooperative Patent Classification (CPC):
**H04N 19/96**

(86) International application number:
**PCT/CN2020/091106**

(87) International publication number:
**WO 2021/232251 (25.11.2021 Gazette 2021/47)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• **YANG, Fuzheng
Dongguan, Guangdong 523860 (CN)**
• **SUN, Zexing
Dongguan, Guangdong 523860 (CN)**
• **WAN, Shuai
Dongguan, Guangdong 523860 (CN)**

(74) Representative: **Manitz Finsterwald
Patent- und Rechtsanwaltspartnerschaft mbB
Martin-Greif-Strasse 1
80336 München (DE)**

(54) **POINT CLOUD ENCODING/DECODING METHOD, ENCODER, DECODER, AND STORAGE MEDIUM**

(57) Embodiments of the present application provide point cloud encoding/decoding method, an encoder, a decoder, and a storage medium. The method comprises: determining a bounding box of a point cloud to be encoded/decoded; when performing octree division on the bounding box of said point cloud on the basis of a Morton code order, obtaining coordinate information of the current node; determining a first neighbor mode on the basis of the coordinate information; determining an entropy encoding parameter/entropy decoding parameter of the current node on the basis of the first neighbor mode; and performing entropy encoding/entropy decoding on occupation information of the current node on the basis of the entropy encoding parameter/entropy decoding parameter. In this way, a first neighbor mode, i.e., location distribution of neighbor nodes when the current node is occupied, is used to predict an entropy encoding parameter/entropy decoding parameter of a sub-node in the current node, and entropy encoding/entropy decoding is performed on occupation information of the sub-node using the predicted entropy encoding parameter/entropy decoding parameter, such that geometric spatial correlation between adjacent nodes are well utilized to perform encoding/decoding, thereby improving geometric encoding/decoding performance.

FIG. 3

**Description**

TECHNICAL FIELD

Embodiments of the disclosure relate to video image processing technologies, and relate, but not limited, to point cloud coding and decoding methods, an encoder, a decoder, and a storage medium.

BACKGROUND

In a point cloud encoder/decoder framework, such as Geometry-based Point Cloud Compression (G-PCC) coding frameworks of the Audio Video coding Standard (AVS) and the Motion Picture Expert Group (MPEG), geometric information of a point cloud and attribute information corresponding to each point are coded separately. First, coordinate conversion is performed on the geometric information so as to include the whole point cloud in a bounding box. Then, quantization is performed. This quantization step mainly implements scaling. Rounding in quantization makes the geometric information corresponding to a part of points the same, and whether to remove duplicate points is determined based on a parameter. The process of quantization and removal of the duplicate points is also referred to as a voxelization process. Next, octree partitioning is performed on the bounding box. In an octree-based geometric information coding framework, the bounding box is equally partitioned into eight sub-cubes. A nonempty sub-cube (including a point in the point cloud) continues to be equally partitioned into eight parts, and the partitioning is performed until a leaf node obtained by partitioning is a $1 \times 1 \times 1$ unit cube. Points in the leaf node are coded to generate a binary bitstream. In the present point cloud coding/decoding standard, the geometric partitioning order includes a breadth first traversal order. Specifically, when geometric octree partitioning is performed, nodes of the current layer are partitioned first, nodes of the next layer continue to be partitioned when the nodes in the current layer are all partitioned, and partitioning is stopped when a leaf node obtained by partitioning is a $1 \times 1 \times 1$ unit cube.

However, in the existing point cloud coding/decoding standard, when geometric octree partitioning is performed, occupation information of each child node corresponds to an independent context respectively. As a result, the spatial correlation is not used fully, and the point cloud coding/decoding efficiency is reduced.

SUMMARY

The embodiments of the disclosure provide point cloud coding and decoding methods, an encoder, a decoder, and a storage medium, which may implement coding/decoding by full use of a geometric spatial correlation between nodes, thereby improving the geometric coding/decoding performance.

In a first aspect, the embodiments of the disclosure provide a cloud point coding method, which may be applied to an encoder and include the following operations.

A bounding box of a point cloud to be coded is determined.

Coordinate information of a current node is acquired in case that octree partitioning is performed on the bounding box of the point cloud to be coded based on a Morton code order.

A first neighbor pattern of the current node is determined based on the coordinate information of the current node.

An entropy coding parameter of the current node is determined based on the first neighbor pattern of the current node.

Entropy coding is performed on occupation information of the current node based on the entropy coding parameter.

In a second aspect, the disclosure provides a point cloud decoding method, which may be applied to a decoder and include the following operations.

A bitstream is parsed to determine a bounding box of a point cloud to be decoded.

Coordinate information of a current node is acquired in case that the bounding box of the point cloud to be decoded is partitioned based on a Morton code order.

A first neighbor pattern of the current node is determined based on the coordinate information of the current node.

An entropy decoding parameter of the current node is determined based on the first neighbor pattern of the current node.

Entropy decoding is performed on occupation information of the current node based on the entropy decoding parameter.

In a third aspect, the embodiments of the disclosure provide an encoder, which may include a first determination unit, a first acquisition unit, a first processing unit, a first prediction unit, and a coding unit.

The first determination unit may be configured to determine a bounding box of a point cloud to be coded.

The first acquisition unit may be configured to acquire coordinate information of a current node in case that octree partitioning is performed on the bounding box of the point cloud to be coded based on a Morton code order.

The first processing unit may be configured to determine a first neighbor pattern of the current node based on the coordinate information of the current node.

The first prediction unit may be configured to determine an entropy coding parameter of the current node based on the first neighbor pattern of the current node.

The coding unit may be configured to perform entropy coding on occupation information of the current node based on the entropy coding parameter.

In a fourth aspect, the embodiments of the disclosure provide a decoder, which may include a parsing unit, a second acquisition unit, a second processing unit, a second prediction unit, and a decoding unit.

The parsing unit may be configured to parse a bitstream to determine a bounding box of a point cloud to be decoded.

The second acquisition unit may be configured to acquire coordinate information of a current node in case that the bounding box of the point cloud to be decoded is partitioned based on a Morton code order.

The second processing unit may be configured to determine a first neighbor pattern of the current node based on the coordinate information of the current node.

The second prediction unit may be configured to determine an entropy decoding parameter of the current node based on the first neighbor pattern of the current node.

The decoding unit may be configured to perform entropy decoding on occupation information of the current node based on the entropy decoding parameter.

In a fifth aspect, the embodiments of the disclosure also provide an encoder, which may include a first memory and a first processor. The first memory may store a computer program capable of running on the first processor. The first processor may execute the program to implement the point cloud coding method for an encoder.

In a sixth aspect, the embodiments of the disclosure provide a decoder, which includes a second memory and a second processor. The second memory stores a computer program capable of running on the second processor. The second processor may execute the program to implement the point cloud decoding method for a decoder.

In a seventh aspect, the embodiments of the disclosure provide a storage medium, on which a computer program is stored. The computer program may be executed by a first processor to implement the point cloud coding method for an encoder. Alternatively, the computer program may be executed by a second processor to implement the point cloud decoding method for a decoder.

The embodiments of the disclosure provide point cloud coding and decoding methods, an encoder, a decoder, and a storage medium. The point cloud coding method includes the following operations. A bounding box of a point cloud to be coded is determined; coordinate information of a current node is acquired in case that octree partitioning is performed on the bounding box of the point cloud to be coded based on a Morton code order; a first neighbor pattern of the current node is determined based on the coordinate information of the current node; an entropy coding parameter of the current node is determined based on the first neighbor pattern of the current node; and entropy coding is performed on occupation information of the current node based on the entropy coding parameter. In this manner, an entropy coding parameter of a child node in the current node is predicted by using the neighbor pattern of the current node, namely a position distribution of occupied neighbor nodes of the current node, and entropy coding is performed on occupation information of the child node by using the predicted entropy coding parameter, so that a geometric spatial correlation between neighbor nodes may be used well for coding/decoding, thereby improving the geometric coding/decoding performance.

BRIEF DESCRIPTION OF THE DRAWINGS

FIG. 1 is a block diagram of an exemplary coding process according to an embodiment of the disclosure.
FIG. 2 is a block diagram of an exemplary decoding process according to an embodiment of the disclosure.
FIG. 3 is a flowchart of a point cloud coding method according to an embodiment of the disclosure.
FIG. 4 is a schematic diagram of exemplary octree partitioning according to an embodiment of the disclosure.
FIG. 5 is a first schematic diagram of an exemplary neighbor pattern of a current node according to an embodiment of the disclosure.
FIG. 6 is a second schematic diagram of an exemplary neighbor pattern of a current node according to an embodiment of the disclosure.
FIG. 7 is a schematic diagram of an exemplary position relationship between child nodes in a current node according to an embodiment of the disclosure.
FIGS. 8a to 8h show first schematic diagrams of exemplary neighbor ranges of a first child node to an eighth child node according to an embodiment of the disclosure.
FIG. 9 is a first schematic diagram of an exemplary neighbor pattern of a second child node according to an embodiment of the disclosure.

FIG. 10 is a second schematic diagram of an exemplary neighbor range of a second child node according to an embodiment of the disclosure.

FIG. 11 is a second schematic diagram of an exemplary neighbor pattern of a second child block according to an embodiment of the disclosure.

FIG. 12 is a third schematic diagram of an exemplary neighbor range of a second child node according to an embodiment of the disclosure.

FIG. 13 is a third schematic diagram of an exemplary neighbor pattern of a second child node according to an embodiment of the disclosure.

FIG. 14 is a flowchart of a point cloud decoding method according to an embodiment of the disclosure.

FIG. 15 is a first composition structure diagram of an encoder according to an embodiment of the disclosure.

FIG. 16 is a second composition structure diagram of an encoder according to an embodiment of the disclosure.

FIG. 17 is a first composition structure diagram of a decoder according to an embodiment of the disclosure.

FIG. 18 is a second composition structure diagram of a decoder according to an embodiment of the disclosure.

## DETAILED DESCRIPTION

In order to make the characteristics and technical contents of the embodiments of the disclosure understood in more detail, the implementation of the embodiments of the disclosure will be described below in combination with the drawings in detail. The appended drawings are only for description as references and not intended to limit the embodiments of the disclosure.

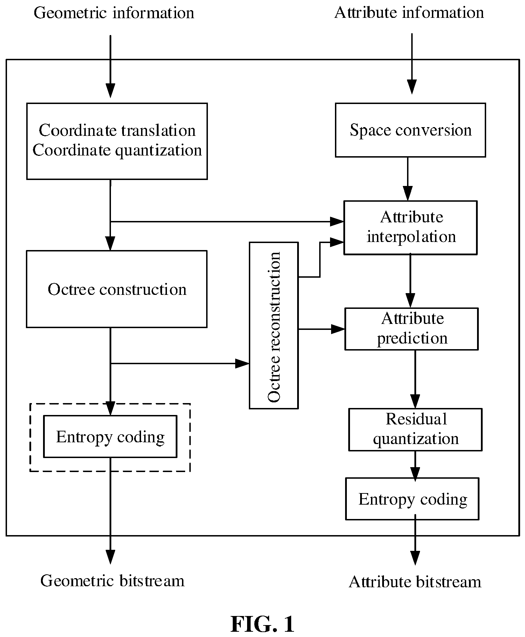

FIG. 1 is a block diagram of an exemplary coding process according to an embodiment of the disclosure. As shown in FIG. 1, geometric information and attribute information corresponding to each point are coded separately in a point cloud coding process. When the geometric information is coded, coordinate conversion is performed on geometric positions so that the point cloud is all included in a bounding box. Then, quantization is performed. This quantization step mainly implements scaling. Rounding in quantization makes the geometric information of part of the point cloud the same. Then, whether to remove duplicate points is determined based on a parameter. The process of quantization and removal of the duplicate points is also referred to as a voxelization process. Next, octree partitioning is performed on the bounding box. In the octree-based geometric position coding process, the bounding box is equally partitioned into eight sub-cubes. A nonempty sub-cube (including a point in the point cloud) continues to be equally partitioned into eight parts, and the partitioning is performed until a leaf node obtained by partitioning is a $1 \times 1 \times 1$ unit cube. Entropy coding is performed on points in the leaf node to generate a geometric bitstream.

The geometric information is reconstructed in an attribute coding process. At present, attribute coding is performed mainly for color and reflectivity information. First, it is determined whether to perform color space conversion. If it is determined to perform color space conversion, the color information is converted from a Red Green Blue (RGB) color space to a YUV color space. Then, the reconstructed point cloud is recolored by use of the original point cloud so as to achieve a correspondence between the uncoded attribute information and the reconstructed geometric information. When the color information is coded, backward difference prediction is performed immediately after the point cloud is ordered based on a Morton code. Finally, a prediction residual is quantized and coded to generate an attribute bitstream.

A high-level syntax element, a geometric bitstream, and an attribute bitstream form a binary bitstream of a three-dimensional image. An encoder sends the binary bitstream to a decoder.

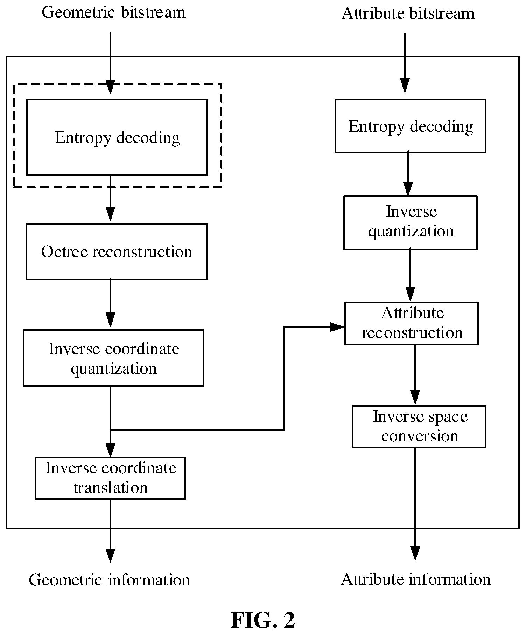

FIG. 2 is a block diagram of an exemplary decoding process according to an embodiment of the disclosure. As shown in FIG. 2, a decoder acquires a binary bitstream, and decodes a geometric bitstream and attribute bitstream in the binary bitstream separately. When the geometric bitstream is decoded, geometric information of a point cloud is obtained by entropy decoding-octree reconstruction-inverse coordinate quantization-inverse coordination translation. When the attribute bitstream is decoded, attribute information of the point cloud is obtained by entropy decoding-inverse quantization-attribute reconstruction-inverse space conversion. A three-dimensional image model of point cloud data is restored based on the geometric information and the attribute information.

Point cloud coding and decoding methods provided in the embodiments of the disclosure are mainly used for the entropy coding part and entropy decoding part enclosed by the dashed boxes in FIGS. 1 and 2.

Based on the background introduced above, the point cloud coding method and point cloud decoding method provided in the embodiments of the disclosure will be introduced respectively below.

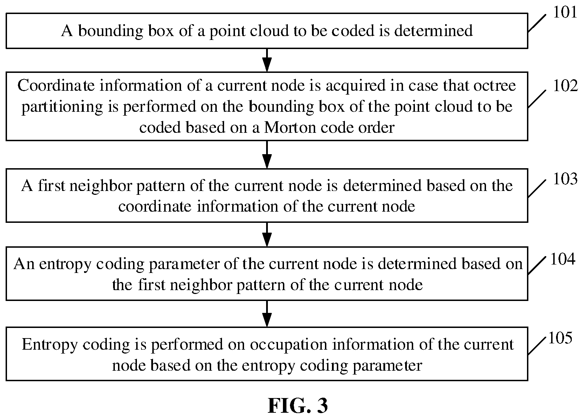

An embodiment of the disclosure provides a cloud point coding method. The method is applied to an encoder, and as shown in FIG. 3, may include the following operations.

At S101, a bounding box of a point cloud to be coded is determined.

In the embodiment of the disclosure, when a three-dimensional image model is coded, point cloud data of the three-dimensional image model to be coded in a space is acquired. The point cloud data includes geometric information and attribute information of the three-dimensional image model. When the three-dimensional image model is coded, geometric information of the point cloud and attribute information corresponding to each point are coded separately. The geometric information is coded by the point cloud coding method provided in the embodiment of the disclosure.

Specifically, when the geometric information is coded, coordinate conversion is performed on geometric positions to include the whole point cloud in a bounding box.

Further, the bounding box is quantized. This quantization step mainly implements scaling. Rounding in quantization makes the geometric information corresponding to a part of points the same. Whether to remove duplicate points is determined based on a parameter. The process of quantization and removal of the duplicate points is also referred to as the voxelization process.

When the original point cloud is quantized, multiple different points may be quantized into duplicate points. When there are multiple duplicate points, if the parameter indicates to perform duplicate point removal, the multiple duplicate points are processed as one point. If the parameter indicates not to perform duplicate point removal, the multiple points with the same geometric coordinate are still processed as multiple points. Next, octree partitioning is performed on the processed bounding box.

At S102, coordinate information of a current node is acquired in case that octree partitioning is performed on the bounding box of the point cloud to be coded based on a Morton code order.

In the embodiment of the disclosure, when octree partitioning is performed on the bounding box of the point cloud, Morton codes of the point cloud are calculated first. Then, a geometric octree is constructed from a root node $\mathrm{N}_0^0$ (the zeroth layer) according to the Morton codes and a Morton code order. The bounding box is equally partitioned into eight sub-cubes. A nonempty sub-cube (including a point in the point cloud) continues to be equally partitioned into eight parts, and partitioning is stopped when a leaf node obtained by partitioning is a 1×1×1 unit cube.

The Morton code order may be a breadth first traversal order or a depth first traversal order. The breadth first traversal order is as follows: when octree partitioning is performed on the geometric information, nodes of the current layer are partitioned first, nodes of the next layer continue to be partitioned when the nodes in the current layer are all partitioned, and partitioning is stopped when a leaf node obtained by partitioning is a 1×1×1 unit cube. The depth first traversal order is as follows: when octree partitioning is performed on the geometric information, a first node of the current layer is continuously partitioned first, partitioning of the current node is stopped when a leaf node obtained by partitioning is a 1×1×1 unit cube, subsequent nodes of the current layer are partitioned in this order, and partitioning is stopped when the nodes in the current layer are all partitioned. That is, according to the point cloud coding method provided in the embodiment of the disclosure, an entropy coding parameter of a child node may be predicted by use of a neighbor pattern of the current node in the breadth first traversal order or the depth first traversal order.

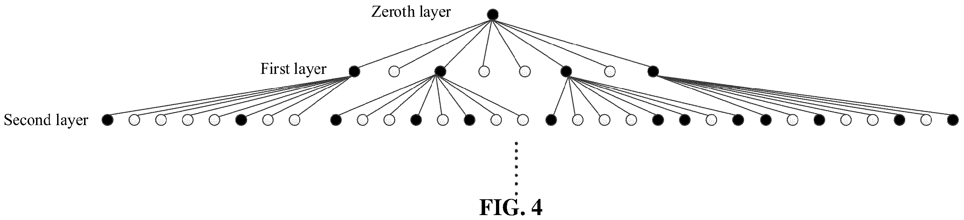

FIG. 4 is a schematic diagram of exemplary octree partitioning according to an embodiment of the disclosure. As shown in FIG. 4, the zeroth layer is a root node, and the next layer of the root node (i.e., the first layer) includes eight child nodes. Nonempty child nodes (black solid circles) continue to be equally partitioned into eight parts to obtain child nodes of the second layer. Partitioning is stopped when a leaf node obtained by partitioning is a 1×1×1 unit cube.

It is assumed that a geometric position of a point in the cloud point is represented by a three-dimensional Cartesian coordinate (X, Y, Z). Each coordinate value is represented by N bits, and a coordinate ($X^k$, $Y^k$, $Z^k$) of the k-th point may be represented as follows:

$$X^k = \left( x_{N-1}^k x_{N-2}^k \ldots x_1^k x_0^k \right)$$

$$Y^k = \left( y_{N-1}^k y_{N-2}^k \ldots y_1^k y_0^k \right)$$

$$Z^k = \left( z_{N-1}^k z_{N-2}^k \ldots z_1^k z_0^k \right)$$

k-th is a kth point in the point cloud. A Morton code corresponding to the k-th point may be represented as follows:

$$M^k = \left( x_{N-1}^k y_{N-1}^k z_{N-1}^k, x_{N-2}^k y_{N-2}^k z_{N-2}^k, \ldots x_1^k y_1^k z_1^k, x_0^k y_0^k z_0^k \right)$$

Every three bits are represented by an octal number $m_n^k = \left( x_n^k \, y_n^k \, z_n^k \right)$ , $n$ = 0,1...,$N$ - 1, and then the Morton code corresponding to the k-th point may be represented as follows:

$$M^k = \left( m_{N-1}^k \, m_{N-2}^k \ldots m_1^k \, m_0^k \right)$$

A specific partitioning process is as follows.

At 1, all points are partitioned into eight child nodes first according to the zeroth octal number of the Morton code $m_{N-1}^k$ as follows.

All points corresponding to $m_{N-1}^k = 0$ are partitioned into the zeroth child node $N_0^1$ .

All points corresponding to $m_{N-1}^k = 1$ are partitioned into the first child node $N_1^1$ .

All points corresponding to $m_{N-1}^k = 7$ are partitioned into the seventh child node $N_7^1$ .

Then, nodes of the first layer of the octree include the eight nodes.

At 2, eight bits $B_0^0 = \left( b_0 b_1 b_2 b_3 b_4 b_5 b_6 b_7 \right)$ represents whether the eight child nodes of the root node $N_0^0$ are occupied. If $N_k^1, k = 0,1,....,7$ includes at least one point in the point cloud, a corresponding bit is $b_k$ = 1. If the child node does not include any point, the corresponding bit is $b_k$ = 0 .

At 3, an occupied node $N_{ln}^1$ in the first layer is further partitioned into eight child nodes according to the first octal number $m_{N-2}^k$ of the Morton code of the geometric position. Occupation information of the child node of the occupied node is represented by eight bits $B_{ln}^1$ (*In* represents a sequence number of the occupied node, $n$ = 0,1,...,$N^1$-1, and $N^1$ represents the number of occupied nodes of the first layer).

At 4, an occupied node $N_{ln}^t$ in a t-th layer (*t = 2,3,..., N - 2*) is further partitioned into eight child nodes according to a t-th octal number $m_{N-1-t}^k$ of the Morton code of the geometric position. Occupation information of the child node of the occupied node is represented by eight bits $B_{ln}^t$ (*In* represents a sequence number of the occupied node, $n$ = 0,1,...,$N^t$ -1, and $N^t$ represents the number of occupied nodes of the t-th layer).

At 5, all nodes of layer t=N-1 become leaf nodes. If the encoder allows duplicate points according to a configuration parameter, it is necessary to record the number of duplicate points on each occupied leaf node in a bitstream. If the encoder does not allow any duplicate point according to the configuration parameter, the duplicate points on each occupied leaf node are processed as one point.

In the embodiment of the disclosure, the encoder, when performing octree partitioning on the bounding box of the point cloud, may determine coordinate information of a current node to be coded according to coordinate information of points in the current node.

At S103, a first neighbor pattern of the current node is determined based on the coordinate information of the current node.

Neighbor nodes in the space are highly correlated. Therefore, entropy coding parameters of eight child nodes in the current node may be predicted according to occupation information of coded neighbor nodes of the current node, and entropy coding is performed on the child nodes by use of the entropy coding parameters matched with the child nodes. As such, a spatial correlation may be used fully.

In some embodiments of the disclosure, the encoder determines a neighbor node practically through the following process. The encoder may determine coordinate information of the neighbor node of the current node based on a three-dimensional Morton code, a preset shift parameter, and the coordinate information of the current node, so as to further determine occupation information of the neighbor node.

Specifically, the operation that the first neighbor pattern of the current node is determined based on the coordinate information of the current node includes the following operations. Coordinate information of each of neighbor nodes corresponding to the current node is determined based on the coordinate information of the current node and a first neighbor range of the current node. Occupation information of the neighbor node is determined based on the coordinate information of the neighbor node. The first neighbor pattern of the current node is determined based on the occupation information of the neighbor nodes and preset first neighbor node weight values.

The first neighbor range defines neighbor nodes of the current node. For example, the first neighbor range includes at least one of neighbor nodes co-planar with the current node, neighbor nodes co-linear with the current node, or neighbor nodes co-dot with the current node. When the bounding box is equally partitioned into eight sub-cubes, there are 6 neighbor nodes co-planar with the current node, 12 neighbor nodes co-linear with the current node, 8 neighbor nodes co-dot with the current node, 18 neighbor nodes co-planar and co-linear with the current node, and 26 neighbor nodes co-planar, co-linear, and co-dot with the current node.

The occupation information is used to represent whether there is a point cloud distributed in the neighbor node, and may be represented by a binary number. For example, 0 represents that the neighbor node is empty and has no point cloud distributed therein, and 1 represents that the neighbor node is nonempty and has a point cloud distributed therein.

The first neighbor pattern represents a position distribution of occupied neighbor nodes within the first neighbor range of the current node. The first neighbor node weight values define correlations between the current node and neighbor nodes at different positions. If the weight value is greater, the correlation with the current node is higher. If the weight value is smaller, the correlation with the current node is lower.

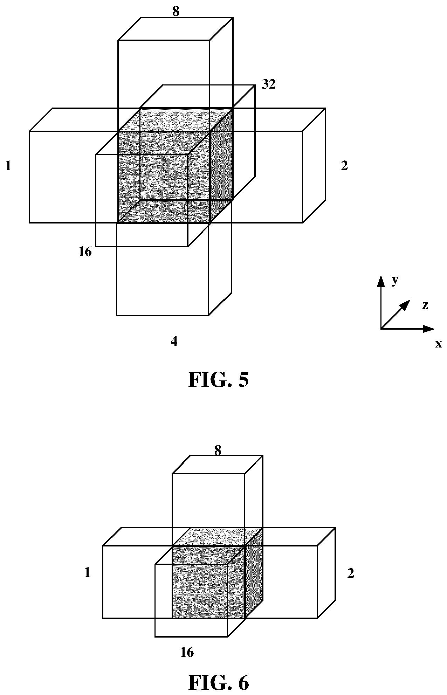

FIG. 5 is a first schematic diagram of an exemplary neighbor pattern of a current node according to an embodiment of the disclosure. As shown in FIG. 5, in a three-dimensional coordinate system xyz, the current node is the gray cube in FIG. 5. The first neighbor range of the current node includes neighbor nodes co-planar with the current node, including a left neighbor node and right neighbor node of the current node in the x direction, a top neighbor node and bottom neighbor node of the current node in the y direction, and a front neighbor node and back neighbor node of the current node in the z direction. Moreover, weight values are set for the neighbor nodes at different positions according to correlations between the neighbor nodes and the current node. For example, in FIG. 5, a weight value for the left neighbor node is 1, a weight value for the right neighbor node is 2, a weight value for the bottom neighbor node is 4, a weight value for the top neighbor node is 8, a weight value for the front neighbor node is 16, and a weight value for the back neighbor node is 32. A neighbor pattern of the current node is calculated according to a spatial relationship shown in FIG. 5. The neighbor pattern (neighborPattern) of the current node is valued to 0 to 63.

FIG. 6 is a second schematic diagram of an exemplary neighbor pattern of a current node according to an embodiment of the disclosure. Neighbor nodes with occupation information being 1 include left, right, front, and top neighbor nodes. It is obtained according to weight values for different neighbor nodes in FIG. 6 that the neighbor pattern of the current node is 27.

At S104, an entropy coding parameter of the current node is determined based on the first neighbor pattern of the current node.

In the embodiment of the disclosure, the first neighbor pattern represents a position distribution of occupied neighbor nodes within the first neighbor range of the current node. When entropy coding is performed on the current node, entropy coding parameters of eight child nodes in the current node may be predicted according to occupation information of one or more coded neighbor nodes. That is, corresponding contexts are selected for different nodes according to correlations between the nodes, thereby fully using the spatial correlation.

In some embodiments of the disclosure, the operation that the entropy coding parameter of the current node is determined based on the first neighbor pattern of the current node includes the following operations. Neighbor information of a child node in the current node is determined based on the first neighbor pattern of the current node. An entropy coding parameter of the child node in the current node is determined based on the neighbor information of the child node in the current node.

That is, when a context of a child node is determined, neighbor information of the child node is determined first according to the first neighbor pattern of the current node (which may also be referred to as a parent node), and then a corresponding entropy coding parameter is selected for the child node according to the neighbor information of the child node.

In some embodiments of the disclosure, the entropy coding parameter is a context index of the child node. That is, in the disclosure, when entropy coding is performed on the current node, a context index corresponding to each child node in the current node is predicted according to the first neighbor pattern of the current node, a context corresponding to the child node is determined according to the context index, and entropy coding is performed on occupation information of the child node in the context corresponding to the child node. Therefore, the spatial correlation between nodes may be used fully, and the coding performance may be improved.

It is to be noted that, in the related art, occupation information of the eight child nodes in the current node corresponds to respective independent contexts. That is, a space occupation code of the node includes eight bits $B_0^0 = \left( b_0 b_1 b_2 b_3 b_4 b_5 b_6 b_7 \right)$ that represents occupation conditions of the eight child nodes of this node respectively. Entropy coding is performed on each bit by use of the independent context. In this method, only the eight contexts may be used for separate coding when entropy coding is performed on the current node, and the spatial correlation is not used fully, reducing the point cloud coding efficiency. However, in the disclosure, multiple contexts may be set for different child nodes by taking the occupation information of the neighbor node into account, so that a more suitable context is selected for entropy coding of each child node. Therefore, the coding performance may be improved.

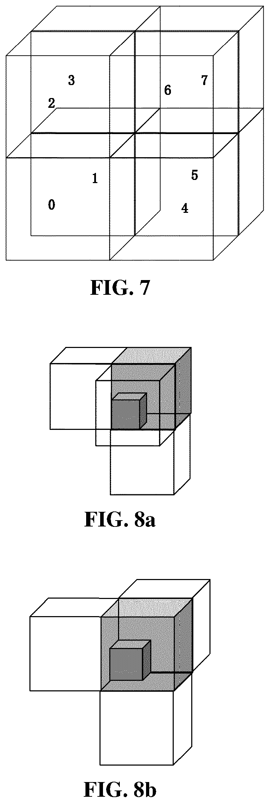

FIG. 7 is a schematic diagram of an exemplary position relationship between child nodes in a current node according to an embodiment of the disclosure. As shown in FIG. 7, the current node is equally partitioned into eight child nodes. These child nodes are numbered and coded from 0 to 7. The front position in the bottom-left corner is the first child node b0, and the back position in the top-right corner is the eighth child node b7.

In some embodiments of the disclosure, the neighbor information is a number of occupied neighbor nodes of the child node or a second neighbor pattern of the child node. The second neighbor pattern represents a position distribution of occupied neighbor nodes within a second neighbor range of the child node.

Specifically, when the neighbor information is the number of occupied neighbor nodes, the operation that neighbor information of the child node in the current node is determined based on the first neighbor pattern of the current node includes the following operations.

The number of occupied neighbor nodes of the child node corresponding to the first neighbor pattern of the current node is acquired from a preset first mapping table. The first mapping table includes a mapping relationship between at least one first neighbor pattern of the current node and a number of occupied neighbor nodes of the child node of the current node.

Alternatively, occupation information of the neighbor nodes corresponding to the current node is determined based on the first neighbor pattern of the current node, and the number of occupied neighbor nodes of the child node is determined based on the occupation information of the neighbor nodes corresponding to the current node and the second neighbor range of the child node.

The second neighbor range includes at least one of neighbor nodes of the current node co-planar with the child node, neighbor nodes of the current node co-linear with the child node, or neighbor nodes of the current node co-dot with the child node. When the bounding box is equally partitioned into eight sub-cubes, there are three neighbor nodes of the current node (i.e., the parent node) co-planar with the child node, three neighbor nodes of the parent node co-linear with the child node, one neighbor node co-dot with the current node, six neighbor nodes of the parent node co-planar and co-linear with the child node, and seven neighbor nodes of the parent node co-planar, co-linear, and co-dot with the child node.

In some embodiments of the disclosure, the second neighbor range of the child node is a subset of the first neighbor range of the current node.

That is, when the number of occupied neighbor nodes of the child node is determined, a first mapping table may be preset, and numbers of occupied neighbor nodes of the eight child nodes are indexed according to the first neighbor pattern of the parent node. The first mapping table may be a two-dimensional table neighborPatternToChildNeighborCount[64][8] shown in Table 1, in which numbers of occupied neighbor nodes of the eight child nodes corresponding to 64 different neighbor patterns are stored. It is to be noted that the neighbor nodes herein are six neighbor nodes co-planar with the current node within the range. That is, there are 64 neighbor patterns, and if the neighbor node range changes, the neighbor pattern and the correspondence also change. Detailed correspondences refer to Table 1, and will not be elaborated herein.

Table 1

| Neighbor pattern | 0 | 1 | 2 | 3 | 4 | 5 | 6 | 7 |
|---|---|---|---|---|---|---|---|---|
| 0 | 0 | 0 | 0 | 0 | 0 | 0 | 0 | 0 |
| 1 | 1 | 1 | 1 | 1 | 0 | 0 | 0 | 0 |
| 2 | 0 | 0 | 0 | 0 | 1 | 1 | 1 | 1 |
| 3 | 1 | 1 | 1 | 1 | 1 | 1 | 1 | 1 |
| 4 | 1 | 1 | 0 | 0 | 1 | 1 | 0 | 0 |
| 5 | 2 | 2 | 1 | 1 | 1 | 1 | 0 | 0 |
| 6 | 1 | 1 | 0 | 0 | 2 | 2 | 1 | 1 |

(continued)

| Neighbor pattern | 0 | 1 | 2 | 3 | 4 | 5 | 6 | 7 |
|---|---|---|---|---|---|---|---|---|
| 7 | 2 | 2 | 1 | 1 | 2 | 2 | 1 | 1 |
| 8 | 0 | 0 | 1 | 1 | 0 | 0 | 1 | 1 |
| 9 | 1 | 1 | 2 | 2 | 0 | 0 | 1 | 1 |
| 10 | 0 | 0 | 1 | 1 | 1 | 1 | 2 | 2 |
| 11 | 1 | 1 | 2 | 2 | 1 | 1 | 2 | 2 |
| 12 | 1 | 1 | 1 | 1 | 1 | 1 | 1 | 1 |
| 13 | 2 | 2 | 2 | 2 | 1 | 1 | 1 | 1 |
| 14 | 1 | 1 | 1 | 1 | 2 | 2 | 2 | 2 |
| 15 | 2 | 2 | 2 | 2 | 2 | 2 | 2 | 2 |
| 16 | 1 | 0 | 1 | 0 | 1 | 0 | 1 | 0 |
| 17 | 2 | 1 | 2 | 1 | 1 | 0 | 1 | 0 |
| 18 | 1 | 0 | 1 | 0 | 2 | 1 | 2 | 1 |
| 19 | 2 | 1 | 2 | 1 | 2 | 1 | 2 | 1 |
| 20 | 2 | 1 | 1 | 0 | 2 | 1 | 1 | 0 |
| 21 | 3 | 2 | 2 | 1 | 2 | 1 | 1 | 0 |
| 22 | 2 | 1 | 1 | 0 | 3 | 2 | 2 | 1 |
| 23 | 3 | 2 | 2 | 1 | 3 | 2 | 2 | 1 |
| 24 | 1 | 0 | 2 | 1 | 1 | 0 | 2 | 1 |
| 25 | 2 | 1 | 3 | 2 | 1 | 0 | 2 | 1 |
| 26 | 1 | 0 | 2 | 1 | 2 | 1 | 3 | 2 |
| 27 | 2 | 1 | 3 | 2 | 2 | 1 | 3 | 2 |
| 28 | 2 | 1 | 2 | 1 | 2 | 1 | 2 | 1 |
| 29 | 3 | 2 | 3 | 2 | 2 | 1 | 2 | 1 |
| 30 | 2 | 1 | 2 | 1 | 3 | 2 | 3 | 2 |
| 31 | 3 | 2 | 3 | 2 | 3 | 2 | 3 | 2 |
| 32 | 0 | 1 | 0 | 1 | 0 | 1 | 0 | 1 |
| 33 | 1 | 2 | 1 | 2 | 0 | 1 | 0 | 1 |
| 34 | 0 | 1 | 0 | 1 | 1 | 2 | 1 | 2 |
| 35 | 1 | 2 | 1 | 2 | 1 | 2 | 1 | 2 |
| 36 | 1 | 2 | 0 | 1 | 1 | 2 | 0 | 1 |
| 37 | 2 | 3 | 1 | 2 | 1 | 2 | 0 | 1 |
| 38 | 1 | 2 | 0 | 1 | 2 | 3 | 1 | 2 |
| 39 | 2 | 3 | 1 | 2 | 2 | 3 | 1 | 2 |
| 40 | 0 | 1 | 1 | 2 | 0 | 1 | 1 | 2 |
| 41 | 1 | 2 | 2 | 3 | 0 | 1 | 1 | 2 |
| 42 | 0 | 1 | 1 | 2 | 1 | 2 | 2 | 3 |
| 43 | 1 | 2 | 2 | 3 | 1 | 2 | 2 | 3 |
| 44 | 1 | 2 | 1 | 2 | 1 | 2 | 1 | 2 |

(continued)

| Neighbor pattern | 0 | 1 | 2 | 3 | 4 | 5 | 6 | 7 |
|---|---|---|---|---|---|---|---|---|
| 45 | 2 | 3 | 2 | 3 | 1 | 2 | 1 | 2 |
| 46 | 1 | 2 | 1 | 2 | 2 | 3 | 2 | 3 |
| 47 | 2 | 3 | 2 | 3 | 2 | 3 | 2 | 3 |
| 48 | 1 | 1 | 1 | 1 | 1 | 1 | 1 | 1 |
| 49 | 2 | 2 | 2 | 2 | 1 | 1 | 1 | 1 |
| 50 | 1 | 1 | 1 | 1 | 2 | 2 | 2 | 2 |
| 51 | 2 | 2 | 2 | 2 | 2 | 2 | 2 | 2 |
| 52 | 2 | 2 | 1 | 1 | 2 | 2 | 1 | 1 |
| 53 | 3 | 3 | 2 | 2 | 2 | 2 | 1 | 1 |
| 54 | 2 | 2 | 1 | 1 | 3 | 3 | 2 | 2 |
| 55 | 3 | 3 | 2 | 2 | 3 | 3 | 2 | 2 |
| 56 | 1 | 1 | 2 | 2 | 1 | 1 | 3 | 3 |
| 57 | 2 | 2 | 3 | 3 | 1 | 1 | 2 | 2 |
| 58 | 1 | 1 | 2 | 2 | 2 | 2 | 3 | 3 |
| 59 | 2 | 2 | 3 | 3 | 2 | 2 | 3 | 3 |
| 60 | 2 | 2 | 2 | 2 | 2 | 2 | 2 | 2 |
| 61 | 3 | 3 | 3 | 3 | 2 | 2 | 2 | 2 |
| 62 | 2 | 2 | 2 | 2 | 3 | 3 | 3 | 3 |
| 63 | 3 | 3 | 3 | 3 | 3 | 3 | 3 | 3 |

Looking up the first mapping table may reduce the calculation amount and improve the coding efficiency. However, in practical applications, the number of occupied neighbor nodes may also be calculated directly. That is, the occupation information of the neighbor nodes is determined according to the first neighbor pattern, and the number of occupied neighbor nodes of the child node is determined based on the occupation information of the neighbor nodes and the second neighbor range of the child node. In this manner, it is unnecessary to preestablish and store the first mapping table, and the number of occupied neighbor nodes of the child node may be determined directly according to the first neighbor pattern. Therefore, if a processor is powerful enough in calculation, the influence of the calculation process on the processing performance may be ignored, the early table creation process is eliminated, and storage space is saved.

In practical applications, the first mapping table may be created by the following method. The numbers of occupied neighbor nodes of the eight child nodes of the current node in different first neighbor patterns are obtained in advance through the above-mentioned calculation process, thereby creating the first mapping table.

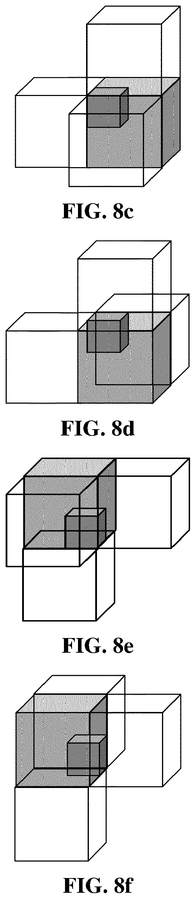

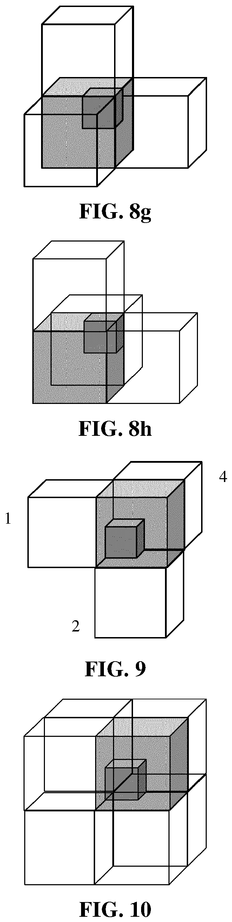

FIGS. 8a to 8h show first schematic diagrams of exemplary neighbor ranges from a first child node to an eighth child node according to an embodiment of the disclosure. A second neighbor range of each child node includes neighbor nodes of the parent node co-planar with the child node. Each of the first child node b0 to the eighth child node b7 includes three neighbor nodes. The number of occupied neighbor nodes of each child node is at most 3 and at least 0.

Assuming that the first neighbor pattern of the current node is 27, it is obtained by looking up Table 1 or by calculation that the number of occupied neighbor nodes of the first child node b0 is 2, the number of occupied neighbor nodes of the second child node b1 is 1, the number of occupied neighbor nodes of the third child node b2 is 3, the number of occupied neighbor nodes of the fourth child node b3 is 2, the number of occupied neighbor nodes of the fifth child node b4 is 2, the number of occupied neighbor nodes of the sixth node b5 is 1, the number of occupied neighbor nodes of the seventh child node b6 is 3, and the number of occupied neighbor nodes of the eighth child node b7 is 2.

In some embodiments of the disclosure, the entropy coding parameter of the current node is a context index of the child node in the current node. The operation that the entropy coding parameter of the child node in the current node is determined based on the neighbor information of the child node in the current node includes that: the context index of the child node is determined based on the number of occupied neighbor nodes of the child node in the current node. For example, the number of occupied neighbor nodes of the child node is determined as the context index of the child node. If the number of occupied neighbor nodes of each child node in FIGS. 8a to 8h is ranged from 0 to 3, there are four context indexes for each child node. That is, each child node corresponds to four contexts. The contexts matched with each of the eight child nodes may be found, thereby improving the coding performance.

In some embodiments of the disclosure, the entropy coding parameter of the current node is a context index of the child node in the current node. The operation that the entropy coding parameter of the child node in the current node is determined based on the neighbor information of the child node in the current node includes the following operations. A context index of a first child node in the current node is determined based on neighbor information of the first child node. A context index of a target child node in the current node is determined based on neighbor information of the target child node and occupation information of a coded child node in the current node. The target child node is a different node from the first child node.

Exemplarily, a method for determining the context index of the child node specifically includes the following operations. A context index of the first child node is determined based on a number of occupied neighbor nodes of the first child node in the current node. A context index of the target child node is determined based on a number of occupied neighbor nodes of the target child node in the current node and occupation information of a coded child node in the current node. The target child node is a different node from the first child node.

That is, when entropy coding is performed on the current node, the first child node is coded first. Therefore, a context index of the first child node may be determined only by means of the neighbor pattern of the current node.

The target child nodes are the second child node to the eighth child node. When entropy coding is performed on the second child node to the eighth child node, the occupation information of the coded child node has been coded, so the coded child node may also be regarded as a neighbor node of the uncoded child node. Therefore, context prediction is performed on the child node to be coded (i.e., the target child node) according to the number of occupied neighbor nodes of the child node to be coded and the occupation information of the coded child node to determine the context index of the child node to be coded. As such, richer contexts may be provided, and the coding performance of the target child node may further be improved.

For example, a method for determining the context index of the first child node specifically includes the following operations. The neighbor information of the first child node is determined as the context index of the first child node. The occupation information of the coded child node in the current node and the neighbor information of the target child node form a binary index, and the binary index is determined as the context index of the target child node.

The corresponding context may be indexed directly by using the binary index. Alternatively, the binary index may be converted into a unitary index to index the corresponding context. For example, the context index of the target child node is obtained by taking the occupation information of the coded child node in the current node as a high bit and the number of occupied neighbor nodes of the target child node as low bits. Alternatively, the context index of the first child node is calculated by taking the second neighbor pattern of the target child node as a high bit and the occupation information of the coded child node as low bits.

That is, the context index of the first child node is the number of occupied neighbor nodes. For example, when the context index of the second child node is calculated, if the number of occupied neighbor nodes is 3, the context index is 3. For a non-first child node, the occupation information of the coded child node and the number of occupied neighbor nodes are both represented by binary numbers, and the context index of the child node is obtained by taking the occupation information as a high bit and the number of occupied neighbor nodes as low bits. For example, if the number of occupied neighbor nodes is 3, converted to a binary number 0011, and the occupation information of the coded child node is 1, the context index 0111 is obtained by merging, corresponding to a decimal number 7.

Table 2 shows the number of contexts of each child node in the current node. The number of occupied neighbors of three neighbors co-planar with each child node in the current node is obtained by use of the neighbor pattern of the current node, and is stored in chilNeighborCount[8]. The number of occupied neighbors of the three neighbors co-planar with each child node is valued to 0 to 3. The context index of b0 is chilNeighborCount[0], which is valued to 0 to 3, namely there are four contexts. The context index of b1 is (b0, chilNeighborCount[1]) with eight values, namely there are eight contexts. In a similar manner, there are allocated totally 1,020 contexts.

Table 2

| Child node | Context index | Number of contexts |
|---|---|---|
| b0 | chilNeighborCount[0] | 4 |
| b1 | (b0, chilNeighborCount[1]) | 8 |
| b2 | (b1b0, chilNeighborCount[2]) | 16 |
| b3 | (b2b1b0, chilNeighborCount[3]) | 32 |

(continued)

| Child node | Context index | Number of contexts |
|---|---|---|
| b4 | (b3b2b1b0, chilNeighborCount[4]) | 64 |
| b5 | (b4b3b2b1b0, chilNeighborCount[5]) | 128 |
| b6 | (b5b4b3b2b1b0, chilNeighborCount[6]) | 256 |
| b7 | (b6b5b4b3b2b1b0, chilNeighborCount[7]) | 512 |

At S105, entropy coding is performed on occupation information of the current node based on the entropy coding parameter.

The entropy coding parameter is used to index an entropy encoder, and entropy coding is performed on the occupation information of the child node by use of the entropy encoder indexed according to the entropy coding parameter. The entropy encoder is constructed according to different contexts of the child node. In the embodiment of the disclosure, the context of the child node is equivalent to the entropy encoder of the child node.

Specifically, the entropy coding parameter is the context index of the child node. The operation that entropy coding is performed on occupation information of the current node based on the entropy coding parameter includes the following operations. A context corresponding to the child node in the current node is determined based on the context index of the child node in the current node. Entropy coding is performed on occupation information of the child node in the context corresponding to the child node. After entropy coding is performed on the occupation information of the child node, coded occupation information is written into a geometric bitstream, such that a decoder decodes the occupation information of the child node in the current node from the geometric bitstream.

Table 3 shows eight different context sets corresponding to eight different child nodes. Each context set includes multiple contexts. A target context in the corresponding context set used for practical coding of each child node is determined according to the context index calculated above. That is, the target context corresponding to each child node in Table 3 is determined according to the corresponding context index in Table 2. Entropy coding is performed on the occupation information of the child node by use of the target context to obtain the geometric bitstream.

Table 3

| Context set | Context |
|---|---|
| context0 | context0_0- context0_3 |
| context1 | context1_0- context1_7 |
| context2 | context2_0- context2_15 |
| contexts | context3_0- context3_31 |
| context4 | context4_0- context4_63 |
| contexts | context5_0- context5_127 |
| context6 | context6_0- context6_255 |
| contexts | context7_0- context7_511 |

Specifically, in case that the neighbor information is the second neighbor pattern of the child node, the operation that neighbor information of each child node in the current node is determined based on the first neighbor pattern of the current node includes the following operations.

The second neighbor pattern of the child node corresponding to the first neighbor pattern of the current node is acquired from a preset second mapping table. The second mapping table includes a mapping relationship between at least one first neighbor pattern of the current node and second neighbor patterns of the child nodes of the current node.

Alternatively, the occupation information of the neighbor nodes corresponding to the current node is determined based on the first neighbor pattern of the current node, and the second neighbor pattern of the child node is determined based on the occupation information of the neighbor nodes corresponding to the current node, and the second neighbor range of the child node, and preset second neighbor node weight values.

The second neighbor range includes at least one of neighbor nodes of the current node co-planar with the child node, neighbor nodes of the current node co-linear with the child node, or neighbor nodes of the current node co-dot with the child node. When the bounding box is equally partitioned into eight sub-cubes, there are three neighbor nodes of the parent node co-planar with the child node, three neighbor nodes of the parent node co-linear with the child node, one neighbor node co-dot with the current node, six neighbor nodes of the parent node co-planar and co-linear with the child node, and seven neighbor nodes of the parent node co-planar, co-linear, and co-dot with the child node.

That is, in some embodiments of the disclosure, a correlation between a neighbor node of the child node and the child node is also considered. A weight value is set for the neighbor node of the child node to represent the correlation between the neighbor node and the child node. If the weight value is greater, the correlation with the current node is higher. If the weight value is smaller, the correlation with the current node is lower.

In some embodiments of the disclosure, the second neighbor range of the child node is a subset of the first neighbor range of the current node.

That is, when the second neighbor pattern of the child node is determined, a second mapping table may be preset, and second neighbor patterns of the eight child nodes are indexed according to the first neighbor pattern of the parent node. If there are 64 neighbor patterns for the current node, the second mapping table stores second neighbor patterns of the eight child nodes corresponding to the 64 first neighbor patterns respectively. For example, the neighbor nodes are six neighbor nodes co-planar with the current node. That is, there are 64 neighbor patterns, and if the neighbor range changes, the neighbor pattern also changes. Detailed correspondences will not be elaborated herein.

Looking up the second mapping table may reduce the calculation amount and improve the coding efficiency. However, in practical applications, the second neighbor pattern may also be calculated directly. That is, the occupation information of the neighbor nodes is determined according to the second neighbor pattern, and the second neighbor pattern of the child node is determined based on the occupation information of the neighbor nodes, the second neighbor range of the child node, and the second neighbor node weight values. In this manner, it is unnecessary to preestablish and store the second mapping table, and the second neighbor pattern of the child node may be determined directly according to the first neighbor pattern. Therefore, if a processor is powerful enough in calculation, the influence of the calculation process on the processing performance may be ignored, the early table creation process is eliminated, and storage space is saved.

In practical applications, the second mapping table may be created by the following method. The second neighbor patterns of the eight child nodes of the current node in different first neighbor patterns are obtained in advance through the above-mentioned calculation process, thereby creating the second mapping table.

FIG. 9 is a first schematic diagram of an exemplary neighbor pattern of a second child node according to an embodiment of the disclosure. As shown in FIG. 9, weight values are set for neighbor nodes according to directions of the neighbor nodes. The weight value for the left neighbor node of the second child node is 1, the weight value for the bottom neighbor node of the second child node is 2, and the weight value for the back neighbor node is 4. There are totally eight neighbor patterns for the second child node, valued to 0 to 7. For example, assuming that the first neighbor pattern of the current node is 27, the neighbor pattern of the second child node is 1.

In some embodiments of the disclosure, the entropy coding parameter of the current node is a context index of the child node in the current node. The operation that an entropy coding parameter of the child node in the current node is determined based on the neighbor information of the child node in the current node includes that: the context index of the child node is determined based on the second neighbor pattern of the child node in the current node. For example, the second neighbor pattern of the child node is determined as the context index of the child node. In FIG. 9, there are eight neighbor patterns for the second child node, and in such case, there are eight context indexes for the second child node. That is, there are eight contexts for the second child node. There are also eight contexts for another child node. The number of contexts of the child node is increased, and the contexts matched with each of the eight child nodes may be found, thereby improving the coding performance.

In some embodiments of the disclosure, the entropy coding parameter of the current node is a context index of the child node in the current node. The operation that an entropy coding parameter of the child node in the current node is determined based on the neighbor information of the child node in the current node includes the following operations. A context index of a first child node in the current node is determined based on neighbor information of the first child node. A context index of a target child node in the current node is determined based on neighbor information of the target child node and occupation information of a coded child node in the current node. The target child node is a different node from the first child node.

Exemplarily, a method for determining the context index of the child node specifically includes the following operations. A context index of the first child node is determined based on a second neighbor pattern of the first child node in the current node. A context index of a target child node is determined based on a second neighbor pattern of the target child node in the current node and occupation information of a coded child node in the current node. The target child node is a different node from the first child node.

That is, when entropy coding is performed on the current node, the first child node is coded first. Therefore, a context index of the first child node may be determined only by means of the neighbor pattern of the current node.

The target child nodes are the second child node to the eighth child node. When entropy coding is performed on the second child node to the eighth child node, the occupation information of the coded child node has been coded, so the coded child node may also be regarded as a neighbor node of the uncoded child node. Therefore, context prediction is performed on the child node to be coded (i.e., the target child node) according to the second neighbor pattern of the child node to be coded and the occupation information of the coded child node to determine the context index of the child node to be coded. As such, richer contexts may be provided, and the coding performance of the target child node may further be improved.

For example, a method for determining the context index of the first child node specifically includes the following operations. The neighbor information of the first child node is determined as the context index of the first child node. The occupation information of the coded child node in the current node and the neighbor information of the target child node form a binary index, and the binary index is determined as the context index of the target child node.

The corresponding context may be indexed directly by using the binary index. Alternatively, the binary index may be converted into a unitary index to index the corresponding context. For example, the context index of the first child node is calculated by taking the occupation information of the coded child node in the current node as a high bit and the second neighbor pattern of the target child node as low bits. Alternatively, the context index of the first child node is calculated by taking the second neighbor pattern of the target child node as a high bit and the occupation information of the coded child node as low bits.

That is, the context index of the first child node is the occupied second neighbor pattern. For example, when the context index of the second child node is calculated, if the second neighbor pattern is 7, the context index is 7. For a non-first child node, the occupation information of the coded child node and the second neighbor pattern are both represented by binary numbers, and the context index of the child node is obtained by taking the occupation information as a high bit and the second neighbor pattern as low bits. For example, if the second neighbor pattern is 7, converted to a binary number 1111, and the occupation information of the coded child node is 1, the context index 11111 is obtained by merging, corresponding to a decimal number 15.

Table 4 shows the number of contexts of each child node in the current node. The second neighbor pattern of each child node in the current node is obtained by use of the neighbor pattern of the current node, and is stored in chilNeighborMode[8]. The second neighbor pattern of each child node is valued to 0 to 7. The context index of b0 is chilNeighborMode[0], valued to 0 to 7, namely there are eight contexts. The context index of b1 is (b0, chilNeighborMode[1]) with 16 values, namely there are 16 contexts. In a similar manner, there are allocated totally 2,040 contexts. Compared with considering the number of occupied neighbors, considering the second neighbor pattern obtains more contexts, which further improves the coding performance.

Table 4

| Child node | Context index | Number of contexts |
|---|---|---|
| b0 | chilNeighborMode [0] | 8 |
| b1 | (b0, chilNeighborMode [1]) | 16 |
| b2 | (b1b0, chilNeighborMode[2]) | 32 |
| b3 | (b2b1b0, chilNeighborMode [3]) | 64 |
| b4 | (b3b2b1b0, chilNeighborMode [4]) | 128 |
| b5 | (b4b3b2b1b0, chilNeighborMode [5]) | 256 |
| b6 | (b5b4b3b2b1b0, chilNeighborMode [6]) | 512 |
| b7 | (b6b5b4b3b2b1b0, chilNeighborMode [7]) | 1024 |

Table 5 shows eight different context sets corresponding to eight different child nodes. Each context set includes multiple contexts. A target context in the corresponding context set used for practical coding of each child node is determined according to the context index calculated above. That is, the target context corresponding to each child node in Table 5 is determined according to the corresponding context index in Table 4. Entropy coding is performed on the occupation information of the child node by use of the target context to obtain the geometric bitstream.

Table 5

| Context set | Context |
|---|---|
| context0 | context0_0- context0_7 |
| context1 | context1_0- context1_15 |

(continued)

| Context set | Context |
|---|---|
| context2 | context2_0- context2_31 |
| contexts | context3_0- context3_63 |
| context4 | context4_0- context4_127 |
| contexts | context5_0- context5_255 |
| context6 | context6_0- context6_511 |
| contexts | context7_0- context7_1023 |

Table 6 shows performance comparison results of the point cloud coding method of the disclosure and PCEMv1. Experimental results show that, by using the algorithm described in the disclosure, the coding performance may be improved. As shown in Table 6, the point-to-point error (BD-rate, D1) and point-to-plane error (BD-rate, D2) of the reconstructed point cloud are improved. Here, the Peak Signal-to-Noise Ratio (PSNR) is an objective criterion of image evaluation, and if the PSNR is greater, the quality of the image is higher. The BD-rate is a parameter for evaluating the performance. A minus BD-rate indicates that the performance is improved. Based on this, if an absolute value of the BD-rate is greater, the gain of the performance is higher.

Table 6

| Sequence name | BD-rate (D1) | BD-rate (D1_H) |
|---|---|---|
| basketball_player_vox11 | -36.2% | -36.5% |
| dancer_vox11 | -34.9% | -34.9% |
| exercise_vox11 | -27.9% | -27.9% |
| model_vox11 | -32.5% | -32.5% |

In the embodiment of the disclosure, there are also provided other four solutions for determining the context index of each child node under different neighbor ranges according to different neighbor information of each child node.
In the first solution, the neighbor information is the number of occupied neighbor nodes, and contexts, totally seven, are defined by use of an occupation number of six neighbors, co-planar and co-linear with the child node, in the neighbor nodes of the current node. The first neighbor range includes neighbor nodes co-planar and co-linear with the current node, and the second neighbor range includes neighbor nodes of the current node co-planar and co-linear with the child node.
FIG. 10 is a second schematic diagram of an exemplary neighbor range of a second child node according to an embodiment of the disclosure. As shown in FIG. 10, there are totally six neighbor nodes co-planar and co-linear with the second child node, and in such case, the number of occupied neighbor nodes of each child node is at most 6 and at least 0, totally 7 values. Then, there are seven contexts for each child node. Alternatively, the number of contexts of each child node is shown in Table 7.

Table 7

| Child node | Context index | Number of contexts |
|---|---|---|
| b0 | chilNeighborCount[0] | 7 |
| b1 | (b0, chilNeighborCount[1]) | 14 |
| b2 | (blb0, chilNeighborCount[2]) | 28 |
| b3 | (b2blb0, chilNeighborCount[3]) | 56 |
| b4 | (b3b2blb0, chilNeighborCount[4]) | 112 |
| b5 | (b4b3b2b1b0, chilNeighborCount[5]) | 224 |
| b6 | (b5b4b3b2b1b0, chilNeighborCount[6]) | 448 |
| b7 | (b6b5b4b3b2blb0, chilNeighborCount[7]) | 896 |

In the second solution, based on the first solution, the neighbor information is the second neighbor pattern of the child node, and contexts, totally 64, are defined by use of occupation patterns of six neighbors co-planar and co-linear with the child node in the neighbor nodes of the current node. Here, the first neighbor range includes neighbor nodes co-planar and co-linear with the current node, and the second neighbor range includes neighbor nodes of the current node co-planar and co-linear with the child node.

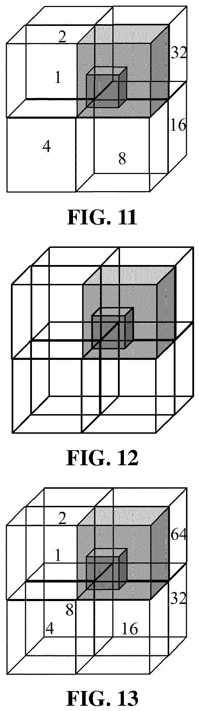

FIG. 11 is a second schematic diagram of an exemplary neighbor pattern of a second child node according to an embodiment of the disclosure. As shown in FIG. 11, there are totally six neighbor nodes co-planar and co-linear with the second child node, and a sum of weight values for the six neighbor nodes is 63. Then, the second neighbor pattern of each child node is valued to 0 to 63, totally 64 values. In such case, there are 64 contexts for each child node. Alternatively, the number of contexts of each child node is shown in Table 8.

Table 8

| Child node | Context index | Number of contexts |
|---|---|---|
| b0 | chilNeighborMode [0] | 64 |
| b1 | (b0, chilNeighborMode [1]) | 128 |
| b2 | (blb0, chilNeighborMode[2]) | 256 |
| b3 | (b2blb0, chilNeighborMode [3]) | 512 |
| b4 | (b3b2blb0, chilNeighborMode [4]) | 1024 |
| b5 | (b4b3b2blb0, chilNeighborMode [5]) | 2048 |
| b6 | (b5b4b3b2blb0, chilNeighborMode [6]) | 4096 |
| b7 | (b6b5b4b3b2blb0, chilNeighborMode [7]) | 8192 |

In the third solution, the neighbor information is the number of occupied neighbor nodes, and contexts, totally eight, are defined by use of an occupation number of seven neighbors co-planar, co-linear, and co-dot with the child node in the neighbor nodes of the current node. Here, the first neighbor range includes neighbor nodes co-planar, co-linear, and co-dot with the current node, and the second neighbor range includes neighbor nodes of the parent node co-planar, co-linear, and co-dot with the current node.

FIG. 12 is a third schematic diagram of an exemplary neighbor range of a second child node according to an embodiment of the disclosure. As shown in FIG. 12, there are totally six neighbor nodes co-planar, co-linear, and co-dot with the second child node, and in such case, the number of occupied neighbor nodes of each child node is at most 7 and at least 0, totally eight values. Then, there are eight contexts for each child node. Alternatively, the number of contexts of each child node is shown in Table 9.

Table 9

| Child node | Context index | Number of contexts |
|---|---|---|
| b0 | chilNeighborCount[0] | 8 |
| b1 | (b0, chilNeighborCount[1]) | 16 |
| b2 | (blb0, chilNeighborCount[2]) | 32 |
| b3 | (b2blb0, chilNeighborCount[3]) | 64 |
| b4 | (b3b2blb0, chilNeighborCount[4]) | 128 |
| b5 | (b4b3b2b1b0, chilNeighborCount[5]) | 256 |
| b6 | (b5b4b3b2b1b0, chilNeighborCount[6]) | 512 |
| b7 | (b6b5b4b3b2blb0, chilNeighborCount[7]) | 1024 |

In the fourth solution, based on the third solution, the neighbor information is the second neighbor pattern of the child node, and contexts, totally 128, are defined by use of occupation patterns of seven neighbors co-planar, co-linear, and co-dot with the child node in the neighbor nodes of the current node. Here, the first neighbor range includes neighbor nodes co-planar, co-linear, and co-dot with the current node, and the second neighbor range includes neighbor nodes of the current node co-planar, co-linear, and co-dot with the child node.

FIG. 13 is a third schematic diagram of an exemplary neighbor pattern of a second child node according to an embodiment of the disclosure. As shown in FIG. 13, there are totally seven neighbor nodes co-planar and co-linear with the second child node, and a sum of weight values for the seven neighbor nodes is 127. Then, the second neighbor pattern of each child node is valued to 0 to 127, totally 128 values. In such case, there are 128 contexts for each child node. Alternatively, the number of contexts of each child node is shown in Table 10.

Table 10

| Child node | Context index | Number of contexts |
|---|---|---|
| b0 | chilNeighborMode [0] | 128 |
| b1 | (b0, chilNeighborMode [1]) | 256 |
| b2 | (b1b0, chilNeighborMode[2]) | 512 |
| b3 | (b2b1b0, chilNeighborMode [3]) | 1024 |
| b4 | (b3b2b1b0, chilNeighborMode [4]) | 2048 |
| b5 | (b4b3b2b1b0, chilNeighborMode [5]) | 4096 |
| b6 | (b5b4b3b2b1b0, chilNeighborMode [6]) | 8192 |
| b7 | (b6b5b4b3b2b1b0, chilNeighborMode [7]) | 16384 |

With the above technical solution, the entropy coding parameter of the child node in the current node is predicted by using the neighbor pattern of the current node, namely the position distribution of the occupied neighbor nodes of the current node, and entropy coding is performed on the occupation information of the child node by using the predicted entropy coding parameter, so that the geometric spatial correlation between neighbor nodes may be used well, thereby improving the geometric coding performance.

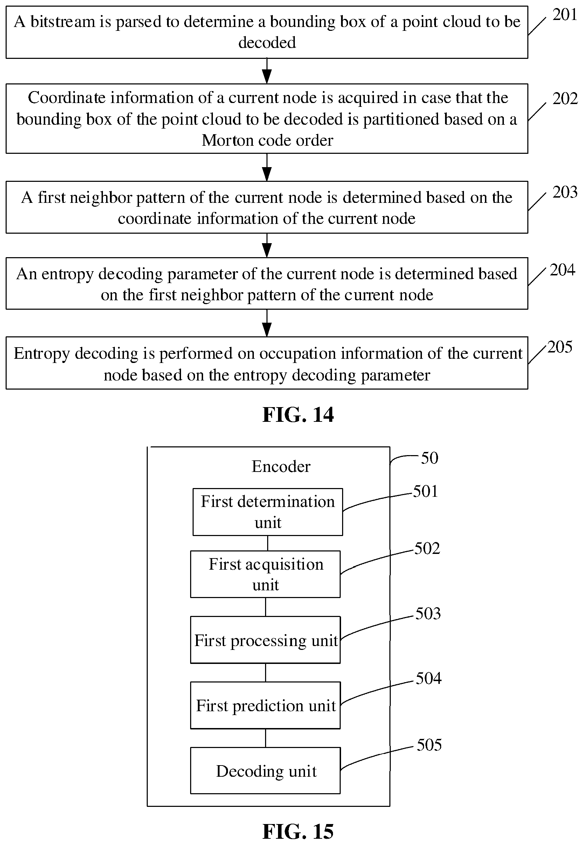

FIG. 14 is a flowchart of a point cloud decoding method according to an embodiment of the disclosure. The method is applied to a decoder, and as shown in FIG. 14, includes the following operations.

At S201, a bitstream is parsed to determine a bounding box of a point cloud to be decoded.

In practical applications, a binary bitstream received by the decoder includes a high-level syntax element, a geometric bitstream, and an attribute bitstream. The decoder decodes the geometric bitstream and attribute bitstream in the binary bitstream separately. When the geometric bitstream is decoded, geometric information of a point cloud is obtained by entropy decoding-octree reconstruction-inverse coordinate quantization-inverse coordination translation. When the attribute bitstream is decoded, attribute information of the point cloud is obtained by entropy decoding-inverse quantization-attribute reconstruction-inverse space conversion. A three-dimensional image model of point cloud data is restored based on the geometric information and the attribute information. The point cloud decoding method provided in the embodiment of the disclosure is mainly used for an entropy decoding part.

Specifically, the decoder parses the bitstream to obtain descriptive information of a bounding box of the point cloud. Further, the bounding box is quantized. This quantization step mainly implements scaling. Rounding in quantization makes the geometric information of a part of points to be the same, and it is determined whether to remove duplicate points based on a parameter. The process of quantization and removal of the duplicate points is also referred to as a voxelization process.

When the original point cloud is quantized, multiple different points may be quantized into duplicate points. When there are multiple duplicate points, if the parameter indicates to perform duplicate point removal, the multiple duplicate points are processed as one point. If the parameter indicates not to perform duplicate point removal, the multiple points with the same geometric coordinate are still processed as multiple points. Next, octree partitioning is performed on the processed bounding box.

At S202, coordinate information of a current node is acquired in case that the bounding box of the point cloud to be decoded is partitioned based on a Morton code order.

In the embodiment of the disclosure, the Morton code order may be a breadth first traversal order or a depth first traversal order. The decoder partitions the bounding box of the point cloud to be decoded in the same manner as the encoder, and elaborations are omitted herein.

At S203, a first neighbor pattern of the current node is determined based on the coordinate information of the current node.

In some embodiments of the disclosure, the operation at S203 may specifically include the following operations. Coordinate information of each of neighbor nodes corresponding to the current node is determined based on the coordinate information of the current node and a first neighbor range of the current node. Occupation information of the neighbor node is determined based on the coordinate information of the neighbor node. The first neighbor pattern of the current node is determined based on the occupation information of the neighbor nodes and preset first neighbor node weight values.

The first neighbor range defines neighbor nodes of the current node. For example, the first neighbor range includes at least one of neighbor nodes co-planar with the current node, neighbor nodes co-linear with the current node, or neighbor nodes co-dot with the current node. When the bounding box is equally partitioned into eight sub-cubes, there are 6 neighbor nodes co-planar with the current node, 12 neighbor nodes co-linear with the current node, 8 neighbor nodes co-dot with the current node, 18 neighbor nodes co-planar and co-linear with the current node, and 26 neighbor nodes co-planar, co-linear, and co-dot with the current node.

The occupation information is used to represent whether there is a point cloud distributed in the neighbor node, and may be represented by a binary number. For example, 0 represents that the neighbor node is empty and has no point cloud distributed therein, and 1 represents that the neighbor node is nonempty and has a point cloud distributed therein.

The first neighbor pattern represents a position distribution of occupied neighbor nodes within the first neighbor range of the current node. The first neighbor node weight values define correlations between the current node and neighbor nodes at different positions. If the weight value is greater, the correlation with the current node is higher. If the weight value is smaller, the correlation with the current node is lower.

At S204, an entropy decoding parameter of the current node is determined based on the first neighbor pattern of the current node.

In some embodiments of the disclosure, the operation that the entropy decoding parameter of the current node is determined based on the first neighbor pattern of the current node includes the following operations. Neighbor information of a child node in the current node is determined based on the first neighbor pattern of the current node. An entropy decoding parameter of the child node in the current node is determined based on the neighbor information of the child node in the current node.

That is, when a context of the child node is determined, neighbor information of the child node is determined first according to the first neighbor pattern of the current node (which may also be referred to as a parent node), and then a corresponding entropy decoding parameter is selected for the child node according to the neighbor information of the child node.

In some embodiments of the disclosure, the entropy decoding parameter is a context index of the child node. That is, in the disclosure, when entropy decoding is performed on the current node, a context index corresponding to each child node in the current node is predicted according to the first neighbor pattern of the current node, a context corresponding to the child node is determined according to the context index, and entropy decoding is performed on occupation information of the child node in the context corresponding to the child node. Therefore, the spatial correlation between nodes may be used fully, and the coding performance may be improved.

In some embodiments of the disclosure, the neighbor information is a number of occupied neighbor nodes of the child node or a second neighbor pattern of the child node. The second neighbor pattern represents a position distribution of occupied neighbor nodes within a second neighbor range of the child node.

Specifically, when the neighbor information is the number of occupied neighbor nodes of the child node, the operation that neighbor information of the child node in the current node is determined based on the first neighbor pattern of the current node includes the following operations.

The number of occupied neighbor nodes of the child node corresponding to the first neighbor pattern of the current node is acquired from a preset first mapping table. The first mapping table includes a mapping relationship between at least one first neighbor pattern of the current node and a number of occupied neighbor nodes of the child node of the current node.

Alternatively, occupation information of the neighbor nodes corresponding to the current node is determined based on the first neighbor pattern of the current node, and the number of occupied neighbor nodes of the child node is determined based on the occupation information of the neighbor nodes corresponding to the current node and the second neighbor range of the child node.

The second neighbor range includes at least one of neighbor nodes of the current node co-planar with the child node, neighbor nodes of the current node co-linear with the child node, or neighbor nodes of the current node co-dot with the child node. When the bounding box is equally partitioned into eight sub-cubes, there are three neighbor nodes of the current node (i.e., the parent node) co-planar with the child node, three neighbor nodes of the parent node co-linear with the child node, one neighbor node co-dot with the current node, six neighbor nodes of the parent node co-planar and co-linear with the child node, and seven neighbor nodes of the parent node co-planar, co-linear, and co-dot with the child node.

Specifically, when the neighbor information is the second neighbor pattern of the child node, the operation that neighbor information of each child node in the current node is determined based on the first neighbor pattern of the current node includes the following operations.

The second neighbor pattern of the child node corresponding to the first neighbor pattern of the current node is acquired from a preset second mapping table. The second mapping table includes a mapping relationship between at least one first neighbor pattern of the current node and second neighbor patterns of the child nodes of the current node.

Alternatively, occupation information of the neighbor nodes corresponding to the current node is determined based on the first neighbor pattern of the current node, and the second neighbor pattern of the child node is determined based on the occupation information of the neighbor nodes corresponding to the current node, the second neighbor range of the child node, and preset second neighbor node weight values of the child node.

The second neighbor range includes at least one of neighbor nodes of the current node co-planar with the child node, neighbor nodes of the current node co-linear with the child node, or neighbor nodes of the current node co-dot with the child node. When the bounding box is equally partitioned into eight sub-cubes, there are three neighbor nodes of the parent node co-planar with the child node, three neighbor nodes of the parent node co-linear with the child node, one neighbor node co-dot with the current node, six neighbor nodes of the parent node co-planar and co-linear with the child node, and seven neighbor nodes of the parent node co-planar, co-linear, and co-dot with the child node.

In some embodiments of the disclosure, the second neighbor range of the child node is a subset of the first neighbor range of the current node.

In some embodiments of the disclosure, the entropy decoding parameter of the current node is a context index of the child node in the current node. The operation that the entropy decoding parameter of the child node in the current node is determined based on the neighbor information of the child node in the current node includes that: the context index of the child node is determined based on the number of occupied neighbor nodes of the child node in the current node. For example, the number of occupied neighbor nodes of the child node is determined as the context index of the child node. If the number of occupied neighbor nodes of each child node in FIGS. 8a to 8h is valued to 0 to 3, there are four context indexes for each child node. That is, each child node corresponds to four contexts, and the contexts matched with each of the eight child nodes may be found, thereby improving the decoding performance.

In some embodiments of the disclosure, the entropy decoding parameter of the current node is a context index of the child node in the current node. The operation that the entropy decoding parameter of the child node in the current node is determined based on the neighbor information of the child node in the current node includes the following operations. A context index of a first child node in the current node is determined based on neighbor information of the first child node. A context index of a target child node in the current node is determined based on neighbor information of the target child node and occupation information of a decoded child node in the current node. The target child node is a different node from the first child node.

That is, when entropy decoding is performed on the current node, the first child node is decoded first. Therefore, a context index of the first child node may be determined only by means of the neighbor pattern of the current node.

The target child nodes are the second child node to the eighth child node. When entropy decoding is performed on the second child node to the eighth child node, the occupation information of the decoded child node has been decoded, so the decoded child node may also be regarded as a neighbor node of the un-decoded child node. Therefore, context prediction is performed on the child node to be decoded (i.e., the target child node) according to the number of occupied neighbor nodes of the child node to be decoded and the occupation information of the decoded child node to determine the context index of the child node to be decoded. As such, richer contexts may be provided, and the decoding performance of the target child node may further be improved.

For example, a method for determining the context index of the first child node specifically includes the following operations. The neighbor information of the first child node is determined as the context index of the first child node. The occupation information of the decoded child node in the current node and the neighbor information of the target child node form a binary index, and the binary index is determined as the context index of the target child node.

The corresponding context may be indexed directly by using the binary index. Alternatively, the binary index may be converted into a unitary index to index the corresponding context. For example, the context index of the target child node is obtained by taking the occupation information of the decoded child node in the current node as a high bit and the number of occupied neighbor nodes of the target child node as low bits. Alternatively, the context index of the first child node is calculated by taking the second neighbor pattern of the target child node as a high bit and the occupation information of the decoded child node as low bits.

In some other embodiments, the neighbor information is the second neighbor pattern of the child node.

The operation that neighbor information of each child node in the current node is determined based on the first neighbor pattern of the current node includes the following operations.

The second neighbor pattern of the child node corresponding to the first neighbor pattern of the current node is acquired from a preset second mapping table. The second mapping table includes a mapping relationship between at least one first neighbor pattern of the current node and second neighbor patterns of the child nodes of the current node.

Alternatively, occupation information of neighbor nodes corresponding to the current node is determined based on the first neighbor pattern of the current node, and the second neighbor pattern of the child node is determined based on the occupation information of the neighbor nodes corresponding to the current node, the second neighbor range of the child node, and preset second neighbor node weight values of the child node.

The second neighbor range includes at least one of neighbor nodes of the current node co-planar with the child node, neighbor nodes of the current node co-linear with the child node, or neighbor nodes of the current node co-dot with the child node. When the bounding box is equally partitioned into eight sub-cubes, there are three neighbor nodes of the current node co-planar with the child node, three neighbor nodes of the parent node co-linear with the child node, one neighbor node co-dot with the current node, six neighbor nodes of the parent node co-planar and co-linear with the child node, and seven neighbor nodes of the parent node co-planar, co-linear, and co-dot with the child node.

That is, in some embodiments of the disclosure, a correlation between a neighbor node of the child node and the child node is also considered. A weight value is set for the neighbor node of the child node to represent the correlation between the neighbor node and the child node. If the weight value is greater, the correlation with the current node is higher. If the weight value is smaller, the correlation with the current node is lower.

In some embodiments of the disclosure, the second neighbor range of the child node is a subset of the first neighbor range of the parent node.

In some embodiments of the disclosure, the entropy decoding parameter of the current node is a context index of the child node in the current node. The operation that the entropy decoding parameter of the child node in the current node is determined based on the neighbor information of the child node in the current node includes that: the context index of the child node is determined based on the second neighbor pattern of the child node in the current node. For example, the second neighbor pattern of the child node is determined as the context index of the child node. In FIG. 9, there are eight neighbor patterns for the second child node. In such case, there are eight context indexes for the second child node. That is, there are eight contexts for the second child node. There are also eight contexts for another child node. The number of contexts of the child node is increased, and the contexts matched with each of the eight child nodes may be found, thereby improving the decoding performance.

In some embodiments of the disclosure, the entropy decoding parameter of the current node is a context index of the child node in the current node. The operation that the entropy decoding parameter of the child node in the current node is determined based on the neighbor information of the child node in the current node includes the following operations. A context index of a first child node in the current node is determined based on neighbor information of the first child node. A context index of a target child node in the current node is determined based on neighbor information of the target child node and occupation information of a decoded child node in the current node. The target child node is a different node from the first child node.

That is, when entropy decoding is performed on the current node, the first child node is decoded first. Therefore, a context index of the first child node may be determined only by means of the neighbor pattern of the current node.

The target child nodes are the second child node to the eighth child node. When entropy decoding is performed on the second child node to the eighth child node, the occupation information of the decoded child node has been decoded, so the decoded child node may also be regarded as a neighbor node of the un-decoded child node. Therefore, context prediction is performed on the child node to be decoded (i.e., the target child node) according to the second neighbor pattern of the child node to be decoded and the occupation information of the decoded child node to determine the context index of the child node to be decoded. As such, richer contexts may be provided, and the decoding performance of the target child node may further be improved.

For example, a method for determining the context index of the first child node specifically includes the following operations. The neighbor information of the first child node is determined as the context index of the first child node. The occupation information of the decoded child node in the current node and the neighbor information of the target child node form a binary index, and the binary index is determined as the context index of the target child node.

The corresponding context may be indexed directly by using the binary index. Alternatively, the binary index may be converted into a unitary index to index the corresponding context. For example, the context index of the first child node is calculated by taking the occupation information of the decoded child node in the current node as a high bit and the second neighbor pattern of the target child node as low bits. Alternatively, the context index of the target child node is calculated by taking the second neighbor pattern of the target child node as a high bit and the occupation information of the decoded child node as low bits.

Similarly, at the decoder, there are also other four solutions for determining the context index of each child node under different neighbor ranges according to different neighbor information of each child node. The four solutions are the same as those of the encoder, and will not be elaborated herein.

At S205, entropy decoding is performed on occupation information of the current node based on the entropy decoding parameter.

With the above technical solution, the entropy decoding parameter of the child node in the current node is predicted by using the neighbor pattern of the current node, namely the position distribution of the occupied neighbor nodes of the current node, and entropy decoding is performed on the occupation information of the child node by using the predicted entropy decoding parameter, so that the geometric spatial correlation between neighbor nodes may be used well, thereby improving the geometric decoding performance.

An embodiment of the disclosure provides an encoder. FIG. 15 is a first composition structure diagram of an encoder according to an embodiment of the disclosure. As shown in FIG. 15, the encoder 50 includes a first determination unit 501, a first acquisition unit 502, a first processing unit 503, a first prediction unit 504, and a coding unit 505.

The first determination unit 501 is configured to determine a bounding box of a point cloud to be coded.

The first acquisition unit 502 is configured to acquire coordinate information of a current node in case that octree partitioning is performed on the bounding box of the point cloud to be coded based on a Morton code order.

The first processing unit 503 is configured to determine a first neighbor pattern of the current node based on the coordinate information of the current node.

The first prediction unit 504 is configured to determine an entropy coding parameter of the current node based on the first neighbor pattern of the current node.

The coding unit 505 is configured to perform entropy coding on occupation information of the current node based on the entropy coding parameter.

In some embodiments of the disclosure, the first processing unit 503 is configured to determine coordinate information of each of neighbor nodes corresponding to the current node based on the coordinate information of the current node and a first neighbor range of the current node, determine occupation information of the neighbor node based on the coordinate information of the neighbor node, and determine the first neighbor pattern of the current node based on the occupation information of the neighbor nodes and preset first neighbor node weight values.

In some embodiments of the disclosure, the first neighbor range includes at least one of neighbor nodes co-planar with the current node, neighbor nodes co-linear with the current node, or neighbor nodes co-dot with the current node.

In some embodiments of the disclosure, the first neighbor pattern represents a position distribution of occupied neighbor nodes within the first neighbor range of the current node.

In some embodiments of the disclosure, the first prediction unit 504 is configured to determine neighbor information of a child node in the current node based on the first neighbor pattern of the current node, and determine an entropy coding parameter of the child node in the current node based on the neighbor information of the child node in the current node.

In some embodiments of the disclosure, the neighbor information is a number of occupied neighbor nodes of the child node or a second neighbor pattern of the child node. The second neighbor pattern represents a position distribution of occupied neighbor nodes within a second neighbor range of the child node.

In some embodiments of the disclosure, in case that the neighbor information is the number of occupied neighbor nodes of the child node, the first prediction unit 504 is configured to acquire the number of occupied neighbor nodes of the child node corresponding to the first neighbor pattern of the current node from a preset first mapping table. The first mapping table includes a mapping relationship between at least one first neighbor pattern of the current node and a number of occupied neighbor nodes of the child node of the current node.

Alternatively, the first prediction unit 504 is configured to determine occupation information of neighbor nodes corresponding to the current node based on the first neighbor pattern of the current node, and determine the number of occupied neighbor nodes of the child node based on the occupation information of the neighbor nodes corresponding to the current node and the second neighbor range of the child node.

In some embodiments of the disclosure, in case that the neighbor information is the second neighbor pattern of the child node, the first prediction unit 504 is configured to acquire the second neighbor pattern of the child node corresponding to the first neighbor pattern of the current node from a preset second mapping table. The second mapping table includes a mapping relationship between at least one first neighbor pattern of the current node and second neighbor patterns of the child nodes of the current node.

Alternatively, the first prediction unit 504 is configured to determine occupation information of the neighbor nodes corresponding to the current node based on the first neighbor pattern of the current node, and determine the second neighbor pattern of the child node based on the occupation information of the neighbor nodes corresponding to the current node, the second neighbor range of the child node, and preset second neighbor node weight values of the child node.

In some embodiments of the disclosure, the second neighbor range includes at least one of neighbor nodes of the current node co-planar with the child node, neighbor nodes of the current node co-linear with the child node, or neighbor nodes of the current node co-dot with the child node.

In some embodiments of the disclosure, the entropy coding parameter of the current node is a context index of the child node in the current node. The first prediction unit 504 is configured to determine a context index of a first child node in the current node based on neighbor information of the first child node, and determine a context index of a target child node in the current node based on neighbor information of the target child node and occupation information of a coded child node in the current node. The target child node is a different node from the first child node.

In some embodiments of the disclosure, the first prediction unit 504 is configured to determine the neighbor information of the first child node as the context index of the first child node.

In some embodiments of the disclosure, the first prediction unit 504 is configured to form a binary index by using the occupation information of the coded child node in the current node and the neighbor information of the target child node, and determine the binary index as the context index of the target child node; or obtain the context index of the target child node by taking the occupation information of the coded child node in the current node as a high bit and the neighbor information of the target child node as low bits.

In some embodiments of the disclosure, the coding unit 505 is configured to determine a context corresponding to the child node in the current node based on the context index of the child node in the current node, and perform entropy coding on occupation information of the child node in the context corresponding to the child node.

In some embodiments of the disclosure, the Morton code order is a breadth first traversal order or a depth first traversal order.

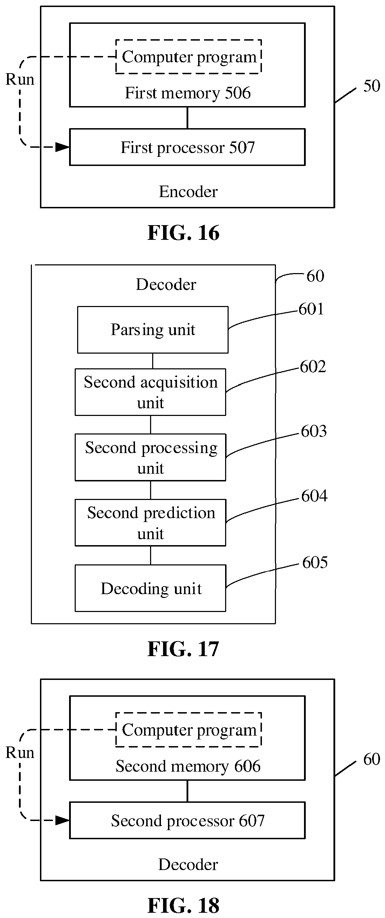

In practical applications, the embodiment of the disclosure also provides an encoder. FIG. 16 is a second composition structure diagram of an encoder according to an embodiment of the disclosure. The encoder 50 includes a first memory 506 and a first processor 507. The first memory 506 stores a computer program capable of running in the first processor 507. The first processor 507 executes the program to implement the point cloud coding method at an encoder.

With the above technical solution, the encoder, when performing entropy coding, predicts the entropy coding parameter of the child node in the current node by use of the neighbor pattern of the current node, namely the position distribution of the occupied neighbor nodes of the current node, and performs entropy coding on the occupation information of the child node by use of the predicted entropy coding parameter, so that the geometric spatial correlation between neighbor nodes may be used well, thereby improving the geometric coding performance.

An embodiment of the disclosure provides a decoder. FIG. 17 is a first composition structure diagram of a decoder according to an embodiment of the disclosure. As shown in FIG. 17, the decoder 60 includes a parsing unit 601, a second acquisition unit 602, a second processing unit 603, a second prediction unit 604, and a decoding unit 604.

The parsing unit 601 is configured to parse a bitstream to determine a bounding box of a point cloud to be decoded.

The second acquisition unit 602 is configured to acquire coordinate information of a current node in case that the bounding box of the point cloud to be decoded is partitioned based on a Morton code order.

The second processing unit 603 is configured to determine a first neighbor pattern of the current node based on the coordinate information of the current node.

The second prediction unit 604 is configured to determine an entropy decoding parameter of the current node based on the first neighbor pattern of the current node.

The decoding unit 605 is configured to perform entropy decoding on occupation information of the current node based on the entropy decoding parameter.

In some embodiments of the disclosure, the second processing unit 603 is configured to determine coordinate information of each of neighbor nodes corresponding to the current node based on the coordinate information of the current node and a first neighbor range of the current node, determine occupation information of the neighbor node based on the coordinate information of the neighbor node, and determine the first neighbor pattern of the current node based on the occupation information of the neighbor nodes and preset first neighbor node weight values.

In some embodiments of the disclosure, the first neighbor range includes at least one of neighbor nodes coplanar with the current node, neighbor nodes co-linear with the current node, or neighbor nodes co-dot with the current node.

In some embodiments of the disclosure, the first neighbor pattern represents a position distribution of occupied neighbor nodes within the first neighbor range of the current node.

In some embodiments of the disclosure, the second prediction unit 604 is configured to determine neighbor information of a child node in the current node based on the first neighbor pattern of the current node, and determine an entropy decoding parameter of the child node in the current node based on the neighbor information of the child node in the current node.

In some embodiments of the disclosure, the neighbor information is a number of occupied neighbor nodes of the child node or a second neighbor pattern of the child node. The second neighbor pattern represents a position distribution of occupied neighbor nodes within a second neighbor range of the child node.

In some embodiments of the disclosure, in case that the neighbor information is the number of occupied neighbor nodes of the child node, the second prediction unit 604 is configured to acquire the number of occupied neighbor nodes of the child node corresponding to the first neighbor pattern of the current node from a preset first mapping table. The first mapping table includes a mapping relationship between at least one first neighbor pattern of the current node and a number of occupied neighbor nodes of the child node of the current node.

Alternatively, the second prediction unit 604 is configured to determine occupation information of the neighbor nodes corresponding to the current node based on the first neighbor pattern of the current node, and determine the number of occupied neighbor nodes of the child node based on the occupation information of the neighbor nodes corresponding to the current node and the second neighbor range of the child node.

In some embodiments of the disclosure, in case that the neighbor information is the second neighbor pattern of the child node, the second prediction unit 604 is configured to acquire the second neighbor pattern of the child node corresponding to the first neighbor pattern of the current node from a preset second mapping table. The second mapping table includes a mapping relationship between at least one first neighbor pattern of the current node and second neighbor patterns of the child nodes of the current node.

Alternatively, the second prediction unit 604 is configured to determine occupation information of the neighbor nodes corresponding to the current node based on the first neighbor pattern of the current node, and determine the second neighbor pattern of the child node based on the occupation information of the neighbor nodes corresponding to the current node, the second neighbor range of the child node, and preset second neighbor node weight values of the child node.

In some embodiments of the disclosure, the second neighbor range includes at least one of neighbor nodes of the current node co-planar with the child node, neighbor nodes of the current node co-linear with the child node, or neighbor nodes of the current node co-dot with the child node.

In some embodiments of the disclosure, the entropy decoding parameter of the current node is a context index of the child node in the current node. The second prediction unit 604 is configured to determine a context index of a first child node in the current node based on neighbor information of the first child node, and determine a context index of a target child node in the current node based on neighbor information of the target child node and occupation information of a decoded child node in the current node. The target child node is a different node from the first child node.

In some embodiments of the disclosure, the second prediction unit 604 is configured to determine the neighbor information of the first child node as the context index of the first child node.

In some embodiments of the disclosure, the second prediction unit 604 is configured to form a binary index by using the occupation information of the decoded child node in the current node and the neighbor information of the target child node, and determine the binary index as the context index of the target child node; or obtain the context index of the target child node by taking the occupation information of the decoded child node in the current node as a high bit and the neighbor information of the target child node as low bits.

In some embodiments of the disclosure, the decoding unit 605 is configured to determine a context corresponding to the child node in the current node based on the context index of the child node in the current node, and perform entropy decoding on occupation information of the child node in the context corresponding to the child node to obtain the occupation information of the child node.

In some embodiments of the disclosure, the Morton code order is a breadth first traversal order or a depth first traversal order.

In practical applications, the embodiment of the disclosure also provides a decoder. FIG. 18 is a second composition structure diagram of a decoder according to an embodiment of the disclosure. The decoder 60 includes a second memory 606 and a second processor 607. The second memory 606 stores a computer program capable of running in the second processor 607. The second processor 607 executes the program to implement the point cloud decoding method at a decoder.

It can be understood that the decoder, when performing entropy decoding, predicts the entropy decoding parameter of the child node in the current node by use of the neighbor pattern of the current node, namely the position distribution of the occupied neighbor nodes of the current node, and performs entropy decoding on the occupation information of the child node by use of the predicted entropy decoding parameter, so that the geometric spatial correlation between neighbor nodes may be used well, thereby improving the geometric decoding performance.

In addition, each function module in the embodiments may be integrated into a processing unit, each unit may also physically exist independently, and two or more than two units may also be integrated into a unit. The integrated unit may be implemented in a hardware form, or in form of a software function module.

Correspondingly, an embodiment of the disclosure provides a storage medium, on which a computer program is stored. The computer program, when executed by a first processor, implements the point cloud coding method for an encoder. Alternatively, the computer program, when executed by a second processor, implements the point cloud decoding method for a decoder.

It is to be pointed out that the above descriptions about the storage medium and device embodiments are similar to those about the method embodiments and beneficial effects similar to those of the method embodiments are achieved. Technical details undisclosed in the storage medium and device embodiments of the disclosure are understood with reference to the descriptions about the method embodiments of the disclosure.

The above is only the implementation mode of the disclosure and not intended to limit the scope of protection of the disclosure. Any variations or replacements apparent to those skilled in the art within the technical scope disclosed in the disclosure shall fall within the scope of protection of the disclosure. Therefore, the scope of protection of the disclosure shall be subject to the scope of protection of the claims.

INDUSTRIAL APPLICABILITY

In the embodiments of the disclosure, point cloud coding and decoding methods, an encoder, a decoder, and a storage medium are provided. The methods include the following operations. A bounding box of a point cloud to be coded/decoded is determined; coordinate information of a current node is acquired in case that octree partitioning is performed on the bounding box of the point cloud to be coded/decoded based on a Morton code order; a first neighbor pattern of the current node is determined based on the coordinate information of the current node; an entropy coding parameter/entropy decoding parameter of the current node is determined based on the first neighbor pattern of the current node; and entropy coding/entropy decoding is performed on occupation information of the current node based on the entropy coding parameter/entropy decoding parameter. In this manner, an entropy coding parameter/entropy decoding parameter of a child node in the current node is predicted by use of the neighbor pattern of the current node, namely a position distribution of occupied neighbor nodes of the current node, and entropy coding/entropy decoding is performed on occupation information of the child node by use of the predicted entropy coding parameter/entropy decoding parameter, so that the geometric spatial correlation between neighbor nodes may be used well for coding/decoding, thereby improving the geometric coding/decoding performance.

**Claims**

1. A point cloud coding method, applied to an encoder and comprising:

   determining a bounding box of a point cloud to be coded;
   acquiring coordinate information of a current node in case that octree partitioning is performed on the bounding box of the point cloud to be coded based on a Morton code order;
   determining a first neighbor pattern of the current node based on the coordinate information of the current node;
   determining an entropy coding parameter of the current node based on the first neighbor pattern of the current node; and
   performing entropy coding on occupation information of the current node based on the entropy coding parameter.

2. The method of claim 1, wherein determining the first neighbor pattern of the current node based on the coordinate information of the current node comprises:

   determining coordinate information of neighbor nodes corresponding to the current node based on the coordinate information of the current node and a first neighbor range of the current node;
   determining occupation information of the neighbor nodes based on the coordinate information of the neighbor nodes; and
   determining the first neighbor pattern of the current node based on the occupation information of the neighbor nodes and preset first neighbor node weight values.

3. The method of claim 2, wherein the first neighbor range comprises at least one of neighbor nodes co-planar with the current node, neighbor nodes co-linear with the current node, or neighbor nodes co-dot with the current node.

4. The method of claim 2, wherein the first neighbor pattern represents a position distribution of occupied neighbor nodes within the first neighbor range of the current node.

5. The method of any one of claims 1-4, wherein determining the entropy coding parameter of the current node based on the first neighbor pattern of the current node comprises:

   determining neighbor information of a child node in the current node based on the first neighbor pattern of the current node; and
   determining an entropy coding parameter of the child node in the current node based on the neighbor information of the child node in the current node.

6. The method of claim 5, wherein the neighbor information is a number of occupied neighbor nodes of the child node or a second neighbor pattern of the child node, the second neighbor pattern representing a position distribution of occupied neighbor nodes within a second neighbor range of the child node.

7. The method of claim 6, wherein in case that the neighbor information is the number of occupied neighbor nodes of the child node, determining the neighbor information of the child node in the current node based on the first neighbor pattern of the current node comprises:

acquiring the number of occupied neighbor nodes of the child node corresponding to the first neighbor pattern of the current node from a preset first mapping table, wherein the first mapping table comprises a mapping relationship between at least one first neighbor pattern of the current node and a number of occupied neighbor nodes of the child node of the current node.

8. The method of claim 6, wherein in case that the neighbor information is the number of occupied neighbor nodes of the child node, determining the neighbor information of the child node in the current node based on the first neighbor pattern of the current node comprises:

determining occupation information of neighbor nodes corresponding to the current node based on the first neighbor pattern of the current node; and
determining the number of occupied neighbor nodes of the child node based on the occupation information of the neighbor nodes corresponding to the current node and the second neighbor range of the child node.

9. The method of claim 6, wherein in case that the neighbor information is the second neighbor pattern of the child node, determining the neighbor information of the child node in the current node based on the first neighbor pattern of the current node comprises:

acquiring the second neighbor pattern of the child node corresponding to the first neighbor pattern of the current node from a preset second mapping table, wherein the second mapping table comprises a mapping relationship between at least one first neighbor pattern of the current node and second neighbor patterns of child nodes of the current node.

10. The method of claim 6, wherein in case that the neighbor information is the second neighbor pattern of the child node, determining the neighbor information of the child node in the current node based on the first neighbor pattern of the current node comprises:

determining occupation information of neighbor nodes corresponding to the current node based on the first neighbor pattern of the current node; and
determining the second neighbor pattern of the child node based on the occupation information of the neighbor nodes corresponding to the current node, the second neighbor range of the child node, and preset second neighbor node weight values of the child node.

11. The method of claim 6, 8, or 10, wherein the second neighbor range comprises at least one of neighbor nodes of the current node co-planar with the child node, neighbor nodes of the current node co-linear with the child node, or neighbor nodes of the current node co-dot with the child node.

12. The method of claim 5, wherein the entropy coding parameter of the current node is a context index of the child node in the current node; and determining the entropy coding parameter of the child node in the current node based on the neighbor information of the child node in the current node comprises:

determining a context index of a first child node in the current node based on neighbor information of the first child node; and
determining a context index of a target child node in the current node based on neighbor information of the target child node and occupation information of a coded child node in the current node, the target child node being a different node from the first child node.

13. The method of claim 12, wherein determining the context index of the first child node in the current node based on the neighbor information of the first child node comprises:
determining the neighbor information of the first child node as the context index of the first child node.

14. The method of claim 12, wherein determining the context index of the target child node in the current node based on the neighbor information of the target child node and the occupation information of the coded child node in the current node comprises:

forming a binary index by using the occupation information of the coded child node in the current node and the neighbor information of the target child node, and determining the binary index as the context index of the target child node;

or, obtaining the context index of the target child node by taking the occupation information of the coded child node in the current node as a high bit and the neighbor information of the target child node as low bits.

15. The method of claim 12, wherein performing entropy coding on the occupation information of the current node based on the entropy coding parameter comprises:

determining a context corresponding to the child node in the current node based on the context index of the child node in the current node; and

performing entropy coding on occupation information of the child node in the context corresponding to the child node.

16. The method of claim 1, wherein the Morton code order is a breadth first traversal order or a depth first traversal order.

17. A point cloud decoding method, applied to a decoder and comprising:

parsing a bitstream to determine a bounding box of a point cloud to be decoded;

acquiring coordinate information of a current node in case that the bounding box of the point cloud to be decoded is partitioned based on a Morton code order;

determining a first neighbor pattern of the current node based on the coordinate information of the current node;

determining an entropy decoding parameter of the current node based on the first neighbor pattern of the current node; and

performing entropy decoding on occupation information of the current node based on the entropy decoding parameter.

18. The method of claim 17, wherein determining the first neighbor pattern of the current node based on the coordinate information of the current node comprises:

determining coordinate information of neighbor nodes corresponding to the current node based on the coordinate information of the current node and a first neighbor range of the current node;

determining occupation information of the neighbor nodes based on the coordinate information of the neighbor nodes; and

determining the first neighbor pattern of the current node based on the occupation information of the neighbor nodes and preset first neighbor node weight values.

19. The method of claim 18, wherein the first neighbor range comprises at least one of neighbor nodes co-planar with the current node, neighbor nodes co-linear with the current node, or neighbor nodes co-dot with the current node.

20. The method of claim 18, wherein the first neighbor pattern represents a position distribution of occupied neighbor nodes within the first neighbor range of the current node.

21. The method of any one of claims 17-20, wherein determining the entropy decoding parameter of the current node based on the first neighbor pattern of the current node comprises:

determining neighbor information of a child node in the current node based on the first neighbor pattern of the current node; and

determining an entropy decoding parameter of the child node in the current node based on the neighbor information of the child node in the current node.

22. The method of claim 21, wherein the neighbor information is a number of occupied neighbor nodes of the child node or a second neighbor pattern of the child node, the second neighbor pattern representing a position distribution of occupied neighbor nodes within a second neighbor range of the child node.

23. The method of claim 22, wherein in case that the neighbor information is the number of occupied neighbor nodes of the child node, determining the neighbor information of the child node in the current node based on the first neighbor pattern of the current node comprises:

acquiring the number of occupied neighbor nodes of the child node corresponding to the first neighbor pattern of the current node from a preset first mapping table, wherein the first mapping table comprises a mapping relationship between at least one first neighbor pattern of the current node and a number of occupied neighbor nodes of the child node of the current node.

24. The method of claim 22, wherein in case that the neighbor information is the number of occupied neighbor nodes of the child node, determining the neighbor information of the child node in the current node based on the first neighbor pattern of the current node comprises:

   determining occupation information of neighbor nodes corresponding to the current node based on the first neighbor pattern of the current node; and
   determining the number of occupied neighbor nodes of the child node based on the occupation information of the neighbor nodes corresponding to the current node and the second neighbor range of the child node.

25. The method of claim 22, wherein in case that the neighbor information is the second neighbor pattern of the child node, determining the neighbor information of the child node in the current node based on the first neighbor pattern of the current node comprises:
   acquiring the second neighbor pattern of the child node corresponding to the first neighbor pattern of the current node from a preset second mapping table, wherein the second mapping table comprises a mapping relationship between at least one first neighbor pattern of the current node and second neighbor patterns of child nodes of the current node.

26. The method of claim 22, wherein in case that the neighbor information is the second neighbor pattern of the child node, determining the neighbor information of the child node in the current node based on the first neighbor pattern of the current node comprises:

   determining occupation information of neighbor nodes corresponding to the current node based on the first neighbor pattern of the current node; and
   determining the second neighbor pattern of the child node based on the occupation information of the neighbor nodes corresponding to the current node, the second neighbor range of the child node, and preset second neighbor node weight values of the child node.

27. The method of claim 22, 24, or 26, wherein the second neighbor range comprises at least one of neighbor nodes of the current node co-planar with the child node, neighbor nodes of the current node co-linear with the child node, or neighbor nodes of the current node co-dot with the child node.

28. The method of claim 21, wherein the entropy decoding parameter of the current node is a context index of the child node in the current node; and determining the entropy decoding parameter of the child node in the current node based on the neighbor information of the child node in the current node comprises:

   determining a context index of a first child node in the current node based on neighbor information of the first child node; and
   determining a context index of a target child node in the current node based on neighbor information of the target child node and occupation information of a decoded child node in the current node, the target child node being a different node from the first child node.

29. The method of claim 28, wherein determining the context index of the first child node in the current node based on the neighbor information of the first child node comprises:
   determining the neighbor information of the first child node as the context index of the first child node.

30. The method of claim 28, wherein determining the context index of the target child node in the current node based on the neighbor information of the target child node and the occupation information of the decoded child node in the current node comprises:

   forming a binary index by using the occupation information of the decoded child node in the current node and the neighbor information of the target child node, and determining the binary index as the context index of the target child node;
   or, obtaining the context index of the target child node by taking the occupation information of the decoded child node in the current node as a high bit and the neighbor information of the target child node as low bits.

31. The method of claim 28, wherein performing entropy decoding on the occupation information of the current node based on the entropy decoding parameter comprises:

   determining a context corresponding to the child node in the current node based on the context index of the child node in the current node; and
   performing entropy decoding on occupation information of the child node in the context corresponding to the child node to obtain the occupation information of the child node.

32. The method of claim 17, wherein the Morton code order is a breadth first traversal order or a depth first traversal order.

33. An encoder, comprising:

   a first determination unit, configured to determine a bounding box of a point cloud to be coded;
   a first acquisition unit, configured to acquire coordinate information of a current node in case that octree partitioning is performed on the bounding box of the point cloud to be coded based on a Morton code order;
   a first processing unit, configured to determine a first neighbor pattern of the current node based on the coordinate information of the current node;
   a first prediction unit, configured to determine an entropy coding parameter of the current node based on the first neighbor pattern of the current node; and
   a coding unit, configured to perform entropy coding on occupation information of the current node based on the entropy coding parameter.

34. A decoder, comprising:

   a parsing unit, configured to parse a bitstream to determine a bounding box of a point cloud to be decoded;
   a second acquisition unit, configured to acquire coordinate information of a current node in case that the bounding box of the point cloud to be decoded is partitioned based on a Morton code order;
   a second processing unit, configured to determine a first neighbor pattern of the current node based on the coordinate information of the current node;
   a second prediction unit, configured to determine an entropy decoding parameter of the current node based on the first neighbor pattern of the current node; and
   a decoding unit, configured to perform entropy decoding on occupation information of the current node based on the entropy decoding parameter.

35. An encoder, comprising a first memory and a first processor, wherein the first memory stores a computer program capable of running on the first processor; and the first processor executes the program to implement the point cloud coding method of any one of claims 1-16.

36. A decoder, comprising a second memory and a second processor, wherein the second memory stores a computer program capable of running on the second processor; and the second processor executes the program to implement the point cloud decoding method of any one of claims 17-32.

37. A storage medium, having stored a computer program thereon, wherein the computer program, when executed by a first processor, implements the point cloud coding method of any one of claims 1-16; or the computer program, when executed by a second processor, implements the point cloud decoding method of any one of claims 17-32.

FIG. 1

Geometric bitstream                    Attribute bitstream

```
              ┌─────────────────┐                    ┌─────────────────┐
              │ Entropy decoding │                    │ Entropy decoding │
              └─────────────────┘                    └─────────────────┘
                       │                                       │
                       ▼                                       ▼
              ┌──────────────────┐                    ┌──────────────────┐
              │Octree reconstruction│                 │     Inverse      │
              └──────────────────┘                    │   quantization   │
                       │                               └──────────────────┘
                       ▼                                       │
              ┌──────────────────┐                            ▼
              │ Inverse coordinate│─────────────────▶ ┌──────────────────┐
              │   quantization    │                   │    Attribute     │
              └──────────────────┘                    │  reconstruction  │
                       │                               └──────────────────┘
                       ▼                                       │
              ┌──────────────────┐                            ▼
              │ Inverse coordinate│                   ┌──────────────────┐
              │   translation     │                   │  Inverse space   │
              └──────────────────┘                    │   conversion     │
                                                       └──────────────────┘
```

Geometric information                    Attribute information

**FIG. 2**

A bounding box of a point cloud to be coded is determined $\quad$ 101

Coordinate information of a current node is acquired in case that octree partitioning is performed on the bounding box of the point cloud to be coded based on a Morton code order $\quad$ 102

A first neighbor pattern of the current node is determined based on the coordinate information of the current node $\quad$ 103

An entropy coding parameter of the current node is determined based on the first neighbor pattern of the current node $\quad$ 104

Entropy coding is performed on occupation information of the current node based on the entropy coding parameter $\quad$ 105

**FIG. 3**

FIG. 4

**FIG. 5**

**FIG. 6**

**FIG. 7**

**FIG. 8a**

**FIG. 8b**

FIG. 8c

FIG. 8d

FIG. 8e

FIG. 8f

FIG. 8g

FIG. 8h

FIG. 9

FIG. 10

FIG. 11

FIG. 12

FIG. 13

EP 4 149 114 A1

| A bitstream is parsed to determine a bounding box of a point cloud to be decoded | 201 |

↓

| Coordinate information of a current node is acquired in case that the bounding box of the point cloud to be decoded is partitioned based on a Morton code order | 202 |

↓

| A first neighbor pattern of the current node is determined based on the coordinate information of the current node | 203 |

↓

| An entropy decoding parameter of the current node is determined based on the first neighbor pattern of the current node | 204 |

↓

| Entropy decoding is performed on occupation information of the current node based on the entropy decoding parameter | 205 |

**FIG. 14**

Encoder — 50

First determination unit — 501

First acquisition unit — 502

First processing unit — 503

First prediction unit — 504

Decoding unit — 505

**FIG. 15**

38

**FIG. 16**

**FIG. 17**

**FIG. 18**

## INTERNATIONAL SEARCH REPORT

| International application No. |
|---|
| **PCT/CN2020/091106** |

**A. CLASSIFICATION OF SUBJECT MATTER**

H04N 19/96(2014.01)i

According to International Patent Classification (IPC) or to both national classification and IPC

**B. FIELDS SEARCHED**

Minimum documentation searched (classification system followed by classification symbols)

H04N

Documentation searched other than minimum documentation to the extent that such documents are included in the fields searched

Electronic data base consulted during the international search (name of data base and, where practicable, search terms used)

CNABS; CNTXT; CNKI; VEN; WOTXT; USTXT; EPTXT; IEEE; google: 点云, 编码, 解码, 编解码, 译码, 多叉树, 八叉树, 四叉树, 二叉树, 边界框, 包围盒, 边界体积, 立方体, 莫顿码, 邻居, 相邻, 邻近, 模式, 配置, 节点, 共面, 共线, 共点, point, cloud, tree, octree, octTree, quad-tree, binary tree, encode, decode, code, Morton, bounding box, cube, neighbor, adjacent, adjoin, mode

**C. DOCUMENTS CONSIDERED TO BE RELEVANT**

| Category* | Citation of document, with indication, where appropriate, of the relevant passages | Relevant to claim No. |
|---|---|---|
| X | WO 2019140510 A1 (BLACKBERRY LTD. et al.) 25 July 2019 (2019-07-25) description, paragraphs [0027]-[0120], and figures 1-20 | 1-37 |
| X | WO 2020075862 A1 (PANASONIC INTELLECTUAL PROPERTY CORPORATION OF AMERICA) 16 April 2020 (2020-04-16) description, paragraphs [0013]-[0776], and figures 1-103 | 1-37 |
| X | Sébastien LASSERRE et al. ""Using neighbouring nodes for the compression of octrees representing the geometry of point clouds"" *MMSys '19: Proceedings of the 10th ACM Multimedia Systems Conference,* 30 June 2019 (2019-06-30), abstract, and full text, sections 1-7 | 1-37 |
| A | CN 109345619 A (NORTH CHINA ELECTRIC POWER UNIVERSITY (BAODING)) 15 February 2019 (2019-02-15) entire document | 1-37 |
| A | EP 3514969 A1 (BLACKBERRY LTD. et al.) 24 July 2019 (2019-07-24) entire document | 1-37 |

☐ Further documents are listed in the continuation of Box C.  ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **14 January 2021** | **10 February 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

| International application No. |
|------------------------------|
| **PCT/CN2020/091106** |

| Patent document cited in search report | | | Publication date (day/month/year) | Patent family member(s) | | | Publication date (day/month/year) |
|---|---|---|---|---|---|---|---|
| WO | 2019140510 | A1 | 25 July 2019 | WO | 2020070191 | A1 | 09 April 2020 |
| | | | | WO | 2020070192 | A1 | 09 April 2020 |
| | | | | CN | 111615792 | A | 01 September 2020 |
| | | | | EP | 3514968 | A1 | 24 July 2019 |
| | | | | KR | 20200109334 | A | 22 September 2020 |
| | | | | EP | 3514967 | A1 | 24 July 2019 |
| | | | | EP | 3514966 | A1 | 24 July 2019 |
| | | | | HK | 40012184 | A0 | 24 July 2020 |
| WO | 2020075862 | A1 | 16 April 2020 | | None | | |
| CN | 109345619 | A | 15 February 2019 | | None | | |
| EP | 3514969 | A1 | 24 July 2019 | CN | 111615791 | A | 01 September 2020 |
| | | | | KR | 20200108875 | A | 21 September 2020 |
| | | | | WO | 2019140508 | A1 | 25 July 2019 |

Form PCT/ISA/210 (patent family annex) (January 2015)